# EUROPEAN PATENT APPLICATION

(11) **EP 4 635 878 A1**
(43) Date of publication of application: **22.10.2025**
(21) Application number: 23903541.3
(22) Date of filing: 13.12.2023
(51) Int. Cl.: B65G 1/00, G05D 1/249

(54) **INPUT/OUTPUT METHOD, INPUT/OUTPUT PROGRAM, INPUT/OUTPUT DEVICE, AND COMPUTER READABLE STORAGE MEDIUM**

(30) Priority: 15.12.2022 JP 2022200458
(71) Applicant: Kabushiki Kaisha Toshiba, Tokyo 105-0023 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: HKW Intellectual Property PartG mbB
(86) International application number: PCT/JP2023/044666
(87) International publication number: WO 2024/128257

(57) **Abstract**

To provide an input and output method that reduce the load on the cooperation among different devices.

An input and output method according to an embodiment includes: inputting an image captured by a camera; performing a recognition process of recognizing a state of at least one of a first or second apparatus configured to process an object of conveyance or a state of the object of conveyance based on a result of an analysis of the image; and outputting a signal for controlling the first or second apparatus based on the recognition process.

## Description

### FIELD

Embodiments described herein relate to an input and output method, an input and output program, an input and output apparatus, and a computer-readable storage medium.

### BACKGROUND

In recent years, the volume of articles handled at a distribution base or the like has increased, and automation of article processing has been promoted. For example, in a warehouse, various automated devices cooperate with each other, and each device delivers an article or equipment storing an article according to an instruction from a host apparatus.

As the automated device, an autonomous mobile robot (abbreviated as AMR), a roll pallet tipper (abbreviated as RPT), a case transfer unit (abbreviated as CTU), a conveyor, and the like are known.

For example, the AMR-A conveys a pallet on which articles and the like are loaded into a predetermined area and stops. The AMR-B obtains the pallet conveyed to the predetermined area and conveys the pallet to the conveyor. The conveyor detects the pallet and conveys the pallet to a predetermined area.

The RPT receives a roll pallet, tilts the received roll pallet, and discharges an article stored in the roll pallet to the conveyor or the like. The roll pallet is a pallet with a carriage and its sides are surrounded by a fence.

The CTU includes a fork mechanism that moves in the vertical direction. The CTU travels toward the conveyor and stops in an area facing the terminal end of the conveyor. The CTU adjusts the height of the fork mechanism according to the height of the conveyor, receives a case, etc., conveyed to the terminal end of the conveyor with the fork mechanism, and conveys the received case, etc., to a predetermined area.

### CITATION LIST

### PATENT LITERATURE

Patent Document 1 Jpn. Pat. Appln. KOKAI Publication No. 2022-52494

### SUMMARY

### TECHNICAL PROBLEM

Various automated devices are input into a warehouse according to a request for article processing, and a common interface (abbreviated as IF) is needed in order to cause these automated devices to cooperate with each other.

If the automated devices have special specifications and do not have a versatile IF, the automated devices perform an operation of changing the IF or perform a test after the change, which involves cost, time, and resources. Also, it may be difficult to modify an old automated device due to the termination of support of the automated device and the like. Further, if multiple types of automated devices from multiple manufacturers are connected to one another, the specifications are presented to each of the manufacturers and changed, thus requiring considerable time and effort, man-hours, and cost. In addition, the operation of a target device needs to be stopped during the change period, likely causing reduction in the operation efficiency of the warehouse.

An object of the present invention is to provide an input and output method, an input and output program, an input and output apparatus, and a computer-readable storage medium that reduce the load on the cooperation among different devices.

### SOLUTION TO PROBLEM

An input and output method according to an embodiment includes: inputting an image captured by a camera; performing a recognition process of recognizing a state of at least one of a first or second apparatus configured to process an object of conveyance or a state of the object of conveyance based on a result of an analysis of the image; and outputting a signal for controlling the first or second apparatus based on the recognition process.

### BRIEF DESCRIPTION OF THE DRAWINGS

FIG. 1 is a conceptual diagram showing an example of a warehouse system according to a first embodiment.
FIG. 2 is a flowchart showing an example of an operation of the warehouse system according to the first embodiment.
FIG. 3 is a diagram showing an example of recognition of a state of an AMR-A according to the first embodiment.
FIG. 4 is a diagram showing an example of recognition of a state of an AMR-B according to the first embodiment.
FIG. 5 is a diagram showing an example of recognition of a shape of the AMR-B according to the first embodiment.
FIG. 6 is a conceptual diagram showing an example of a warehouse system according to a second embodiment.
FIG. 7 is a flowchart showing an example of an operation of the warehouse system according to the second embodiment.
FIG. 8 is a diagram showing an example of recognition of a state of an AMR according to the second embodiment.
FIG. 9 is a diagram showing an example of recognition of a state (completion of reception preparation) of an RPT according to the second embodiment.
FIG. 10 is a diagram showing an example of recognition of a state (completion of operation preparation) of the RPT according to the second embodiment.
FIG. 11 is a diagram showing an example of recognition of a state (reception completion) of the AMR according to the second embodiment.
FIG. 12 is a diagram showing an example of recognition of a state (completion of article discharge) of the RPT according to the second embodiment.
FIG. 13 is a conceptual diagram showing an example of a warehouse system according to a third embodiment.
FIG. 14 is a flowchart showing an example of an operation of the warehouse system according to the third embodiment.
FIG. 15 is a diagram showing an example of recognition of a state of an article according to the third embodiment.
FIG. 16 is a diagram showing an example of recognition of a shape of an article according to the third embodiment.
FIG. 17 is a conceptual diagram showing an example of a warehouse system according to a fourth embodiment.
FIG. 18 is a flowchart showing an example of an operation of the warehouse system according to the fourth embodiment.
FIG. 19 is a diagram showing an example of recognition of a state of an AGV according to the fourth embodiment.

### DETAILED DESCRIPTION

### <First Embodiment>

Hereinafter, a first embodiment will be described with reference to the drawings.

### [Configuration]

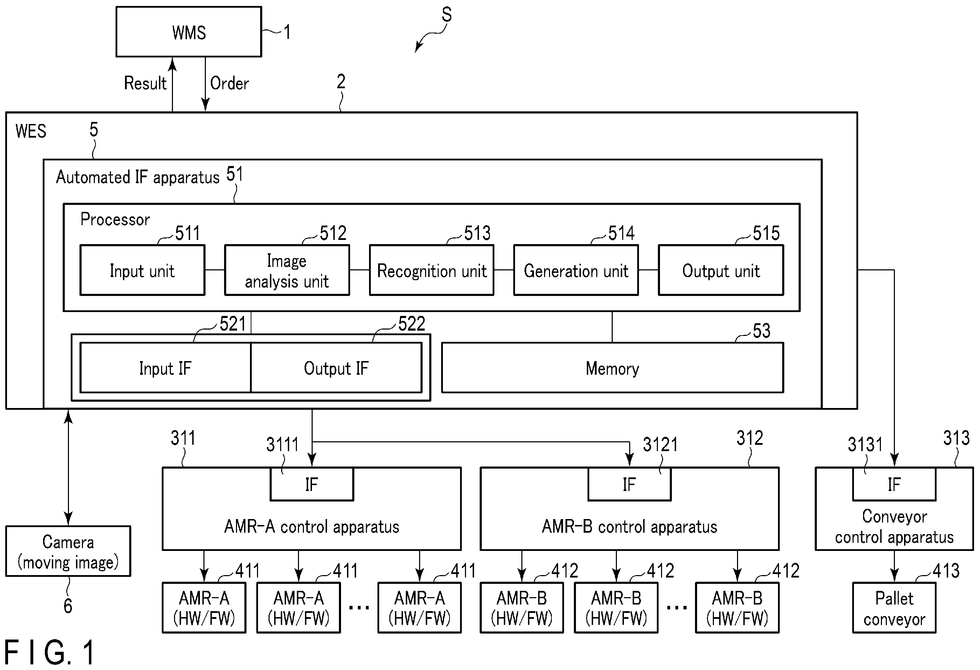

FIG. 1 is a conceptual diagram showing an example of a warehouse system according to the first embodiment.

In the first embodiment, an automated IF apparatus 5 is configured to input an image from a camera 6, analyze the image, perform a recognition process of recognizing a state of a first or second apparatus that processes an object of conveyance based on a result of the image analysis, and output a signal for controlling the first or second apparatus based on the recognition process.

For example, the automated IF apparatus 5 is configured to perform a first recognition process of recognizing a state of an AMR-A 411, which is the first apparatus, based on a result of an image analysis, and output a first signal for controlling an AMR-B 412, which is the second apparatus, based on a first result of recognition.

Also, the automated IF apparatus 5 is configured to perform a second recognition process of recognizing a state of the AMR-B 412 based on a result of an image analysis, and output a second signal for controlling the AMR-A 411 based on a second result of recognition.

The automated IF apparatus 5 can cause the AMR-A 411 and the AMR-B 412 to operate in cooperation with each other by sequentially outputting the first and second signals.

As shown in FIG. 1, an article processing system S includes a warehouse management system (WMS) 1, a warehouse execution system (WES) 2, an AMR-A control apparatus 311, an AMR-B control apparatus 312, a conveyor control apparatus 313, an AMR-A (hardware/firmware) 411, an AMR-B (hardware/firmware) 412, a pallet conveyor 413, and a camera 6.

The AMR-A 411 is an example of the first apparatus that processes (conveys) an object of conveyance. Also, the AMR-A 412 is an example of the second apparatus that processes (conveys) an object of conveyance. The first and second apparatuses are not limited to an AMR, and may be an automated guided vehicle (AGV), an automated guided vehicle forklift (AGF), or the like. For example, the object of conveyance is equipment such as a pallet that stores an article. While there is one or more AMR-As 411, the present embodiment assumes a case where there are multiple AMR-As 411. While there is one or more AMR-Bs 412, the present embodiment assumes a case where there are multiple AMR-Bs 412. There is one or more cameras 6. Each of them will be described in the present embodiment.

The WES 2 includes the automated IF (interface) apparatus 5 as an input and output apparatus. The automated IF apparatus 5 may be configured inside the WES 2 or outside the WES 2.

The WMS 1 can be configured by one or more general-purpose computers, that is, an input and output IF, a processor, a memory, and the like. The processor is a central processing unit (CPU), a micro processing unit (MPU), a digital signal processor (DSP), or the like. The WMS 1 receives an article order from a host server and transmits it to the WES 2.

The article order is an order for designating one or more articles, and includes article information, ordering information, delivery information, and the like. The article information includes the number of articles, article identification information, article names, and the like. The ordering information includes an ordering date and time, an ordering party, and the like. The delivery information includes a delivery destination, a delivery date and time, a recipient, and the like.

The WES 2 can be configured by one or more general-purpose computers, that is, an input and output IF, a processor, a memory, and the like. The processor is a CPU, an MPU, a DSP, or the like. The WES 2 is configured to receive a plurality of article orders from the WMS 1, instruct the warehousing and shipping of articles based on the article orders, and receive the result. The WES 2 is configured to transmit the received result to the WMS 1.

The AMR-A control apparatus 311 can be configured by one or more general-purpose computers, that is, an IF, a processor, a memory, and the like. The processor is a CPU, an MPU, a DSP, or the like. For example, the AMR-A control apparatus 311 includes an IF 3111, and the IF 3111 is configured to receive a signal output from the automated IF apparatus 5. For example, this signal is a command, and the command is an application programming interface (abbreviated as "API") command. The IF 3111 is an API. The AMR-A control apparatus 311 is configured to output a control signal for controlling the AMR-A 411 based on the received command.

The AMR-B control apparatus 312 can be configured by one or more general-purpose computers, that is, an IF, a processor, a memory, and the like. The processor is a CPU, an MPU, a DSP, or the like. For example, the AMR-B control apparatus 312 includes an IF 3121, and the IF 3121 receives a signal output from the automated IF apparatus 5. For example, this signal is a command, and the command is an API command. The IF 3121 is an API. The AMR-B control apparatus 312 is configured to output a control signal for controlling the AMR-B 412 based on the received command.

The conveyor control apparatus 313 is one or more general-purpose computers or a programmable logic controller (PLC). That is, the conveyor control apparatus 313 can be configured by an IF, a processor, a memory, and the like. The processor is a CPU, an MPU, a DSP, or the like. For example, the conveyor control apparatus 313 includes an IF 3131, and the IF 3131 receives a signal output from the automated IF apparatus 5. For example, this signal is a command, and the command is an API command. The IF 3131 is an API. The conveyor control apparatus 313 is configured to output a control signal for controlling the pallet conveyor 413 based on the received command.

The AMR-A 411 (hardware/firmware) is configured to perform a first operation of conveying an object of conveyance from a first area to a second area and stopping in the second area and a second operation of moving from the second area to the first area and stopping in the first area, based on a control signal from the AMR-A control apparatus 311. For example, the AMR-A 411 is configured to move and stop such that the centroid of each area corresponds to the centroid of the AMR-A 411.

The AMR-B 412 (hardware/firmware) is configured to perform a third operation of conveying the object of conveyance from the second area to a third area, stopping in the third area, and placing a pallet on the pallet conveyor 413, a fourth operation of moving from the third area to a fourth area (retreat area) and stopping (retreating) in the fourth area, and a fifth operation of moving from the fourth area to the second area and obtaining the pallet in the second area, based on a control signal from the AMR-B control apparatus 312. For example, the AMR-B 412 is configured to move and stop such that the centroid of each area corresponds to the centroid of the AMR-B 412.

The camera 6 is configured to capture images of areas in which the AMR-A 411 and the AMR-B 412 operate, and output the captured images. For example, the camera 6 is configured to capture images of the second and fourth areas and output the captured images. Alternatively, a plurality of cameras 6 may be used so that a first camera 6 captures an image of the second area and outputs the captured image, and that a second camera 6 captures an image of the fourth area and outputs the captured image.

The automated IF apparatus 5 can be configured by one or more general-purpose computers, that is, an IF, a processor, a memory, and the like. The processor is a CPU, an MPU, a DSP, or the like. For example, the automated IF apparatus 5 includes a processor 51, an input IF 521, an output IF 522, and a memory 53. The automated IF apparatus 5 is an agent that executes an input and output method and an input and output program.

The processor 51 includes an input unit 511, an image analysis unit 512, a recognition unit 513, a generation unit 514, and an output unit 515. The processor 51 implements the functions of the respective units by executing the programs stored in the memory 53.

The input IF 521 is configured to input an image captured by the camera 6, that is, an image output from the camera 6, wirelessly or via a wire.

The input unit 511 is configured to input an image from the input IF 521. The input unit 511 is also configured to input dictionary data for image recognition. The dictionary data includes dictionary images (templates) of the AMR-A 411 and the AMR-B 412.

The image analysis unit 512 is configured to analyze the input image and output a result of the analysis.

The recognition unit 513 is configured to perform the first recognition process of recognizing a state of the AMR-A 411 based on the result of the image analysis and the dictionary data. The recognition unit 513 is also configured to perform the second recognition process of recognizing a state of the AMR-B 412 based on the result of the image analysis and the dictionary data.

The generation unit 514 is configured to generate a first command for controlling the AMR-B 412 based on the first recognition process. The generation unit 514 is also configured to generate a second command for controlling the AMR-A 411 based on the second recognition process. The first command is a signal for causing the AMR-B 412 to perform the third operation. The second command is a signal for causing the AMR-A 411 to perform the second operation.

The output unit 515 is configured to output the generated first or second command.

The output IF 522 is configured to output the first command to the AMR-B control apparatus 312 and output the second command to the AMR-A control apparatus 311 wirelessly or via a wire.

### [Operation]

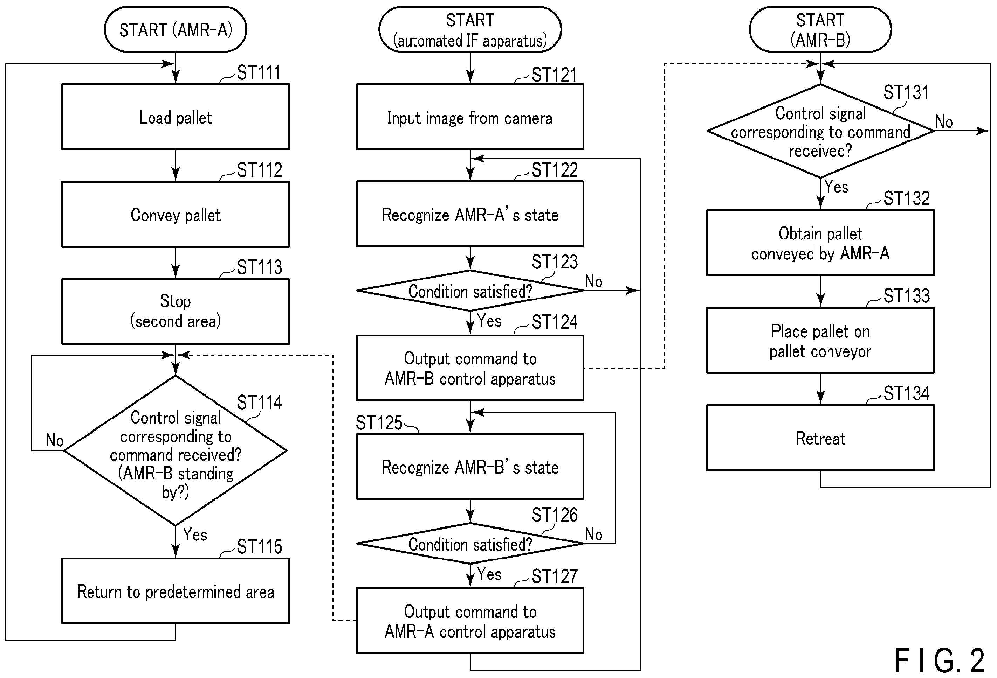

FIG. 2 is a flowchart showing an example of an operation of the warehouse system according to the first embodiment.

ST 111 to ST 115 show an example of an operation of the AMR-A 411, ST 121 to ST 127 show an example of an operation of the automated IF apparatus 5, and ST 131 to ST 134 show an example of an operation of the AMR-B 412.

First, an operation of the AMR-A 411 will be described.

The automated IF apparatus 5 transmits a command to the AMR-A control apparatus 311 based on an instruction from the WES 2 or a result of the recognition of an image from the camera 6. The AMR-A control apparatus 311 transmits a control signal for controlling the AMR-A 411 based on the command. The AMR-A 411 operates based on the control signal.

The AMR-A 411 moves to the first area and loads a pallet based on the control signal (ST 111). A person in charge may load a pallet onto the AMR-A 411.

Based on the control signal, the AMR-A 411 conveys the pallet from the first area to the second area (ST 112) and performs the first operation of stopping in the second area (ST 113). A person in charge may input an instruction of conveyance to the AMR-A 411 after loading the pallet on the AMR-A 411, so that the AMR-A 411 performs the first operation based on the input.

Further, upon receiving a control signal (second control signal) (ST 114, YES), the AMR-A 411 performs the second operation of moving from the second area to the first area and stopping in the first area based on the received control signal (ST 115).

Next, an operation of the automated IF apparatus 5 will be described.

The input IF 521 of the automated IF apparatus 5 inputs an image from the camera 6 (ST 121).

The processor 51 inputs the image from the input IF 521, analyzes the image, and outputs a result of the analysis.

The processor 51 performs the first recognition process of recognizing a state of the AMR-A 411 based on the result of the analysis and the dictionary data (ST 122).

The processor 51 determines whether or not the result of the first recognition process satisfies a predetermined condition (ST 123). The number of predetermined conditions is one or plural, and is determined according to the needs of the warehouse system.

For example, if the number of predetermined conditions is one, the processor 51 determines whether or not a condition C111 for recognizing the AMR-A 411 is satisfied. If the number of predetermined conditions is two, the processor 51 determines whether or not a change in the operation speed of the AMR-A 411 satisfies a condition C112 in addition to the condition C111. Alternatively, the processor 51 determines whether or not the area in which the AMR-A 411 stops satisfies a condition C113 in addition to the condition C111. If the number of predetermined conditions is three, the processor 51 determines whether or not the conditions C111, C112, and C113 are satisfied.

If the processor 51 determines that the predetermined conditions are satisfied (ST 123, YES), the processor 51 generates the first command for controlling the AMR-B 412 and outputs the first command. For example, if the AMR-A 411 decelerates at a predetermined speed change and stops in the second area, the processor 51 determines that the conditions C111, C112, and C113 are satisfied. The output IF 522 outputs the first command from the processor 51 to the AMR-B control apparatus 312 (ST 124).

The AMR-B control apparatus 312 receives the first command and outputs a first control signal based on the first command to the AMR-B 412. The AMR-B 412 performs the third operation based on the first control signal.

Further, the processor 51 performs the second recognition process of recognizing a state of the AMR-B 412 based on the result of the analysis and the dictionary data (ST 125).

The processor 51 determines whether or not the result of the second recognition process satisfies a predetermined condition (ST 126). The number of predetermined conditions is one or plural, and is determined according to the needs of the warehouse system.

For example, if the number of predetermined conditions is one, the processor 51 determines whether or not a condition C121 for recognizing the AMR-B 412 is satisfied. If the number of predetermined conditions is two, the processor 51 determines whether or not a change in the operation speed of the AMR-B 412 satisfies a condition C122 in addition to the condition C121. Alternatively, the processor 51 determines whether or not the area in which the AMR-B 412 stops satisfies a condition C123 in addition to the condition C121. If the number of predetermined conditions is three, the processor 51 determines whether or not the conditions C121, C122, and C123 are satisfied. (ST 126).

If the processor 51 determines that the predetermined conditions are satisfied (ST 126, YES), the processor 51 generates the second command for controlling the AMR-A 411 and outputs the second command. For example, if the AMR-B 412 decelerates at a predetermined speed change and stops in the fourth area, the processor 51 determines that the conditions C121, C122, and C123 are satisfied. The output IF 522 outputs the second command from the processor 51 to the AMR-A control apparatus 311 (ST 127).

The AMR-A control apparatus 311 receives the second command and outputs a second control signal based on the second command to the AMR-A 411. The AMR-A 411 performs the second operation based on the second control signal.

Next, an operation of the AMR-B 412 will be described.

The automated IF apparatus 5 transmits a command to the AMR-B control apparatus 312 based on an instruction from the WES 2 or a result of the recognition of an image from the camera 6. The AMR-B control apparatus 312 transmits a control signal for controlling the AMR-B 412 based on the command. The AMR-B 412 operates based on the control signal.

For example, the AMR-B 412 retreating in the fourth area receives the first control signal from the AMR-B control apparatus 312 (ST 131, YES), and performs the fifth operation of moving from the fourth area to the second area and obtaining a pallet conveyed by the AMR-A 411 in the second area based on the first control signal (ST 132).

The AMR-B 412 also performs the third operation of conveying the pallet from the second area to the third area, stopping in the third area, and placing the pallet on the pallet conveyor 413 based on the first control signal (ST 133).

The AMR-B 412 also performs the fourth operation of moving and retreating from the third area to the fourth area (retreat area) based on the first control signal (ST 134).

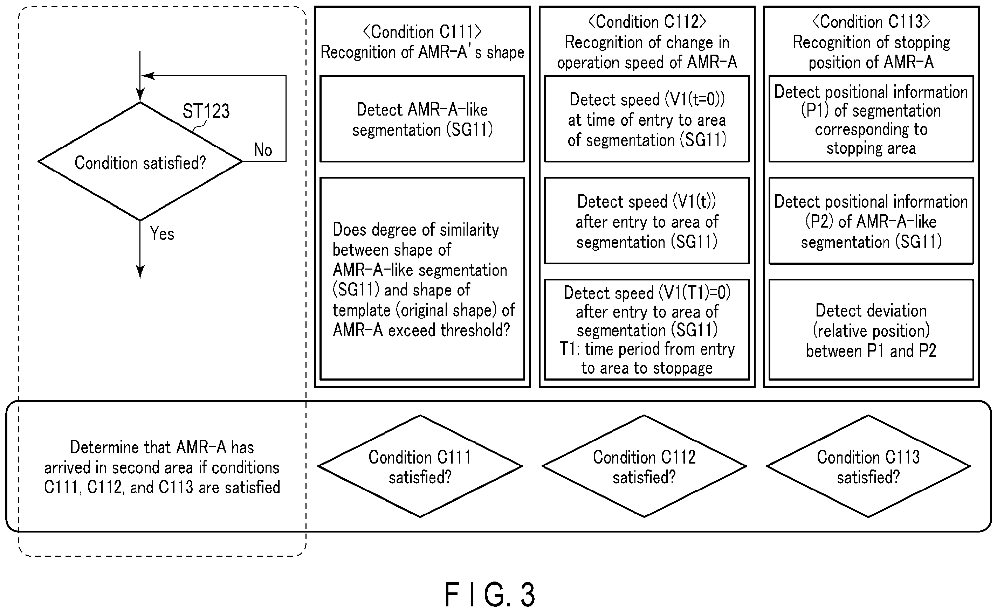

FIG. 3 is a diagram showing an example of recognition of a state of the AMR-A according to the first embodiment. That is, FIG. 3 is a diagram for explaining ST 123 shown in FIG. 2.

In this example, the processor 51 determines that the result of the first recognition process satisfies the predetermined condition if the conditions C111, C112, and C113 are satisfied. The processor 51 determines that the AMR-A 411 has arrived and stopped in the second area if the predetermined condition is satisfied.

The condition C111 is the recognition of a shape of the AMR-A 411. The processor 51 detects an AMR-A 411-like segmentation (SG11) included in an image, and determines whether or not a degree of similarity between a shape of the segmentation (SG11) and a shape of a template (original shape) of the AMR-A 411 exceeds a threshold. The processor 51 determines that the condition C111 is satisfied if the degree of similarity exceeds the threshold.

AMR identification information recognition may be used in addition to or in place of the recognition of a shape of the AMR-A 411. All of the AMRs are provided with AMR identification information formed of a combination of characters, numerals, symbols, etc., or AMR identification information formed of a barcode or a two-dimensional code. The processor 51 recognizes the AMR identification information included in an image captured by the camera 6, collates the registered AMR identification information stored in the memory 53 with the recognized AMR identification information, and, if they match, determines that the condition C111 is satisfied and recognizes the AMR-A 411 as a predetermined AMR-A 411.

The condition C112 is the recognition of a change in the operation speed from the entrance to the stoppage of the AMR-A 411. The processor 51 detects the characteristics of the change in the operation speed. For example, the processor 51 detects a speed (V1 (t = 0)) at the time of the entry to the area of the segmentation (SG11) and a speed (V1 (t)) and (V1 (T1) = 0) after the entry to the area of the segmentation (SG11). T1 is a period of time from the time of the entry to the area of the segmentation (SG11) to the time of the stoppage.

The processor 51 recognizes the AMR-A 411 based on the characteristics of the change in the operation speed. For example, if the change in the operation speed satisfies a criterion, the processor 51 recognizes this change in the operation speed as the change in the operation speed of the AMR-A 411, and determines that the condition C112 is satisfied based on the recognition. For example, based on reference values v1, v2, t1, and t2, the processor 51 determines that the condition C112 is satisfied if v1 < V1 (0) < v2 and t1 < T1 < t2 are satisfied.

The condition C113 is the recognition of a stopping position of the AMR-A 411. The processor 51 recognizes the stoppage of the AMR-A 411 based on a positional relationship between a reference point of the stopping area and a reference point of the AMR-A 411. For example, the processor 51 detects positional information (P1) of a segmentation corresponding to the second area (stopping area), detects positional information (P2) of the AMR-A 411-like segmentation (SG11), and detects a deviation (relative position) between the reference points P1 and P2.

The processor 51 determines whether a distance between the centroid positions of the reference points P1 and P2 is within an expected certain value, that is, within a range from the lower limit to the upper limit. If the distance between the centroid positions is within the range from the lower limit to the upper limit, the processor 51 recognizes the stoppage of the AMR-A 411 and determines that the condition C113 is satisfied based on the recognition.

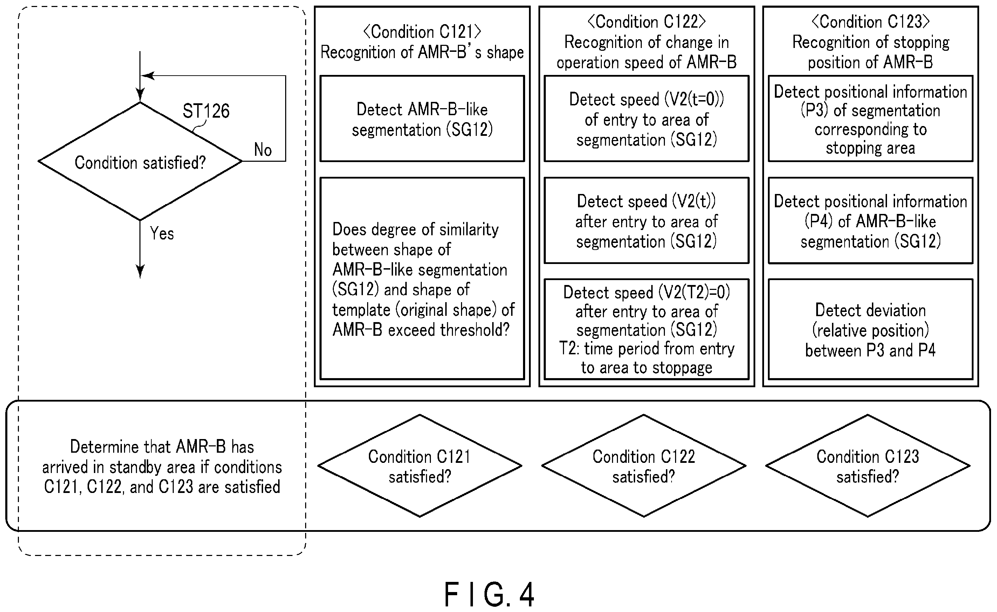

FIG. 4 is a diagram showing an example of recognition of a state of the AMR-B according to the first embodiment. That is, FIG. 4 is a diagram for explaining ST 126 shown in FIG. 2.

In this example, the processor 51 determines that the result of the second recognition process satisfies the predetermined condition if the conditions C121, C122, and C123 are satisfied. The processor 51 determines that the AMR-B 412 has arrived and stopped in the fourth area (retreat position) if the predetermined condition is satisfied.

The condition C121 is the recognition of a shape of the AMR-B 412. The processor 51 detects an AMR-B 412-like segmentation (SG12) included in an image, and determines whether or not a degree of similarity between a shape of the segmentation (SG12) and a shape of a template (original shape) of the AMR-B 412 exceeds a threshold. The processor 51 determines that the condition C121 is satisfied if the degree of similarity exceeds the threshold.

AMR identification information recognition may be used in addition to or in place of the recognition of a shape of the AMR-B 412.

The condition C122 is the recognition of a change in the operation speed from the entrance to the stoppage of the AMR-B 412. The processor 51 detects the characteristics of the change in the operation speed. For example, the processor 51 detects a speed (V2 (t = 0)) at the time of the entry to the area of the segmentation (SG12) and a speed (V2 (t)) and (V2 (T2) = 0) after the entry to the area of the segmentation (SG12). T2 is a period of time from the time of the entry to the area of the segmentation (SG12) to the time of the stoppage.

The processor 51 recognizes the AMR-B 412 based on the characteristics of the change in the operation speed. For example, if the change in the operation speed satisfies a criterion, the processor 51 recognizes this change in the operation speed as the change in the operation speed of the AMR-B 412, and determines that the condition C122 is satisfied based on the recognition. For example, based on reference values v3, v4, t3, and t4, the processor 51 determines that the condition C122 is satisfied if v3 < V2 (0) < v4 and t3 < T2 < t4 are satisfied.

The condition C123 is the recognition of a stopping position of the AMR-B 412. The processor 51 recognizes the stoppage of the AMR-A 412 based on a positional relationship between a reference point of the stopping area and a reference point of the AMR-B 412. For example, the processor 51 detects positional information (P3) of a segmentation corresponding to the fourth area (stopping area), detects positional information (P4) of the AMR-B 412-like segmentation (SG12), and detects a deviation (relative position) between P3 and P4.

The processor 51 determines whether a distance between the centroid positions of P3 and P4 is within an expected certain value, that is, within a range from the lower limit to the upper limit. If the distance between the centroid positions is within the range from the lower limit to the upper limit, the processor 51 recognizes the stoppage of the AMR-B 412 and determines that the condition C123 is satisfied based on the recognition.

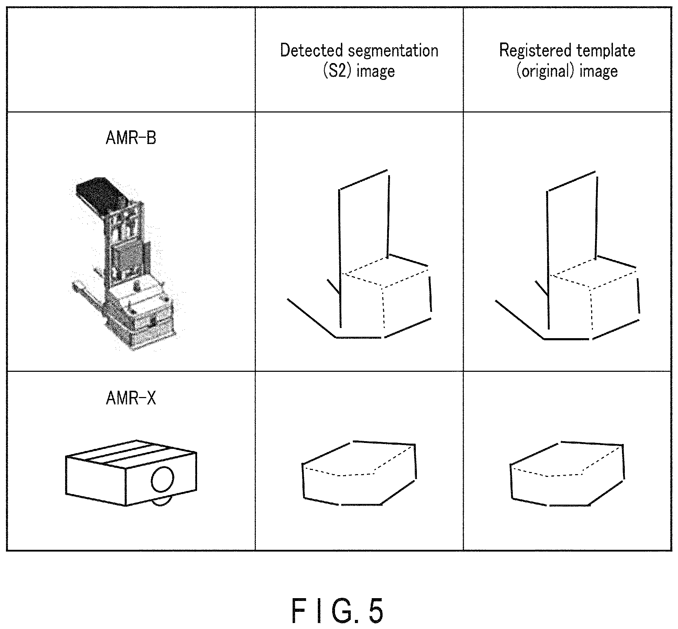

FIG. 5 is a diagram showing an example of recognition of a shape of the AMR-B according to the first embodiment.

The memory 53 registers (stores) the images of the templates (original images) of all of the AMRs. The processor 51 collates the image of the detected segmentation (SG12) with the registered images of the templates. The processor 51 recognizes the detected segmentation (SG12) as the AMR-B 412 if a degree of similarity between the image of the detected segmentation (SG12) and the image of the template of the AMR-B 412 exceeds a threshold. The processor 51 recognizes the detected segmentation (SG12) as not being the AMR-B 412 if the degree of similarity between the image of the detected segmentation (SG12) and the image of the template of the AMR-B 412 does not exceed the threshold. The processor 51 recognizes the detected segmentation (SG12) as another AMR if a degree of similarity between the image of the detected segmentation (SG12) and the image of the template of said another AMR exceeds a threshold.

As described above, the automated IF apparatus 5 of the first embodiment uses an image captured by the camera 6 as an input to output signals such as API commands for controlling apparatuses such as the AMR-A 411 and the AMR-B 412. The automated IF apparatus 5 analyzes the input image, recognizes a state (state transition) of one of the apparatuses based on the result of the analysis, and outputs a signal such as an API command for controlling the other of the apparatuses based on the result of the recognition.

If each of the control apparatuses such as the AMR-A control apparatus 311 and the AMR-B control apparatus 312 for controlling each apparatus includes an API, it is not necessary to modify the IF of each of the control apparatuses. In this manner, according to the first embodiment, in the case where the operations of the apparatuses are coordinated, the coordination load can be reduced. Also, by making the automated IF apparatus 5 independent from the WES 2, it is possible to make the apparatuses operate in cooperation with each other even if a system failure occurs in the WES 2.

In the first embodiment, the case where the automated IF apparatus 5 is applied to two types of processing apparatuses, such as the AMR-A 411 and the AMR-B 412, that is, two processing apparatuses in total, is described; however, the automated IF apparatus 5 may be applied to three or more types of processing apparatuses, that is, three or more processing apparatuses in total. The target of control of the automated IF apparatus 5 is not limited to the AMR, and an old processing apparatus or a general-purpose conveyor may be the target of control. Further, a control apparatus that connects the automated IF apparatus 5 and the processing apparatus to be controlled may be realized by a programmable logic controller (PLC).

### <Second Embodiment>

Hereinafter, a second embodiment will be described with reference to the drawings. The components denoted by the same reference numerals as those used in the first embodiment are substantially the same as those in the first embodiment, and the description thereof will be appropriately omitted.

### [Configuration]

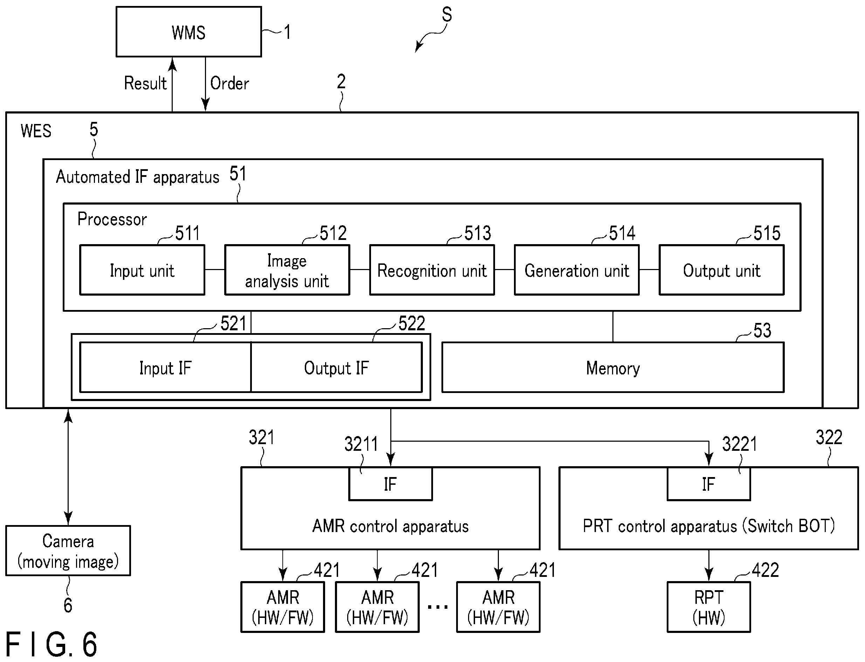

FIG. 6 is a conceptual diagram showing an example of a warehouse system according to the second embodiment.

In the second embodiment, an automated IF apparatus 5 is configured to input an image from a camera 6, analyze the image, perform a recognition process of recognizing a state of at least one of a first apparatus or a second apparatus that processes an object of conveyance based on a result of the image analysis, and output a signal for controlling the first or second apparatus based on the recognition process.

For example, the automated IF apparatus 5 is configured to perform a first recognition process of recognizing states of an AMR 412, which is the first apparatus, and an RPT 422, which is the second apparatus, based on a result of an image analysis, and output a first signal for controlling the AMR 412 based on a first result of recognition.

Also, the automated IF apparatus 5 is configured to perform a second recognition process of recognizing states of the AMR 412 and the RPT 422 based on a result of an image analysis, and output a second signal for controlling the RPT 422 based on a second result of recognition.

The automated IF apparatus 5 is also configured to perform a third recognition process of recognizing a state of the RPT 422 based on a result of an image analysis, and output a third signal for controlling the AMR 412 based on a third result of recognition.

The automated IF apparatus 5 can cause the AMR 412 and the RPT 422 to operate in cooperation with each other by sequentially outputting the first, second, and third signals.

As shown in FIG. 6, the article processing system S includes a WMS 1, a WES 2, an AMR control apparatus 321, an RPT control apparatus 322, an AMR (hardware/firmware) 421, an RPT (hardware) 422, the automated IF apparatus 5, and the camera 6. The AMR 421 corresponds to the AMR-A 411, and the description thereof is omitted herein.

The AMR control apparatus 321 can be configured by one or more general-purpose computers, that is, an IF, a processor, a memory, and the like. The processor is a CPU, an MPU, a DSP, or the like. For example, the AMR control apparatus 321 includes an IF 3211, and the IF 3211 is configured to receive the first and third signals output from the automated IF apparatus 5. For example, the first signal is a first command, and the first command is an API command. The third signal is a third command, and the third command is an API command. The IF 3211 is an API. The AMR control apparatus 321 is configured to output a first control signal for controlling the AMR 412 based on the received first command, and output a third control signal for controlling the AMR 412 based on the received third command.

The RPT control apparatus 322 can be configured by one or more dedicated apparatuses, PLCs, or general-purpose computers, that is, an IF, a processor, a memory, and the like. The processor is a CPU, an MPU, a DSP, or the like. For example, the RPT control apparatus 322 is a switch BOT and includes an IF 3221, and the IF 3221 receives the second signal output from the automated IF apparatus 5. For example, the second signal is a second command, and the second command is an API command. The IF 3221 is an API. The RPT control apparatus 322 is configured to output a second control signal for controlling the RPT 422 based on the received second command.

The AMR 421 is configured to perform a first operation of conveying equipment from a first area to a second area and stopping in the second area, a second operation of setting the equipment in the RPT 422, a third operation of retreating from the RPT 422 and stopping in a third area, and a fourth operation of collecting the equipment set in the RPT 422, based on a control signal from the AMR control apparatus 321. For example, the AMR 421 is configured to move and stop such that the centroid of each area corresponds to the centroid of the AMR 421.

The RPT 422 is configured to receive equipment such as a roll pallet, tilt the received roll pallet, and discharge an article stored in the roll pallet to the conveyor or the like. The roll pallet is a pallet with a carriage and its sides are surrounded by a fence. The RPT 422 is configured to perform a fifth operation of discharging an article from the equipment to a predetermined position after receiving the equipment set by the AMR 421 based on a control signal from the RPT control apparatus 322.

The camera 6 is configured to capture images of an area in which the AMR 421 operates and the RPT 422, and outputs the captured images. For example, the camera 6 is configured to capture images of the second area and the RPT 422 and output the captured images. Alternatively, a plurality of cameras 6 may be used so that a first camera 6 captures an image of the third area and outputs the captured image, and that a second camera 6 captures an image of the RPT 422 and outputs the captured image.

The basic configuration of the automated IF apparatus 5 is as described in the first embodiment.

The input unit 511 is configured to input an image from the input IF 521. The input unit 511 is also configured to input dictionary data for image recognition. The dictionary data includes dictionary images (templates) of the AMR 421 and the RPT 422. For example, the dictionary data includes a dictionary image in a state in which the RPT 422 has received the roll pallet and a dictionary image in a state before the RPT 422 receives the roll pallet.

The image analysis unit 512 is configured to analyze the input image and output a result of the analysis.

The recognition unit 513 is configured to perform first and second recognition processes for recognizing states of the AMR 421 and the RPT 422 based on the result of the image analysis and the dictionary data. The recognition unit 513 is also configured to perform a third recognition process of recognizing a state of the RPT 422 based on the result of the image analysis and the dictionary data.

The generation unit 514 is configured to generate a first command for controlling the AMR 421 based on the first recognition process. The generation unit 514 is also configured to generate a third command for controlling the RPT 422 based on the second recognition process. The generation unit 514 is also configured to generate a second command for controlling the AMR 421 based on the third recognition process. The first command is a signal for causing the AMR 421 to perform the second operation. The second command is a signal for causing the AMR-A 411 to perform the fifth operation. The third command is a signal for causing the AMR-A 411 to perform the fourth operation.

The output unit 515 is configured to output the generated first, second, or third command.

The output IF 522 is configured to output the first command to the AMR control apparatus 321, output the second command to the RPT control apparatus 322, and output the third command to the AMR control apparatus 321 wirelessly or by wire.

### [Operation]

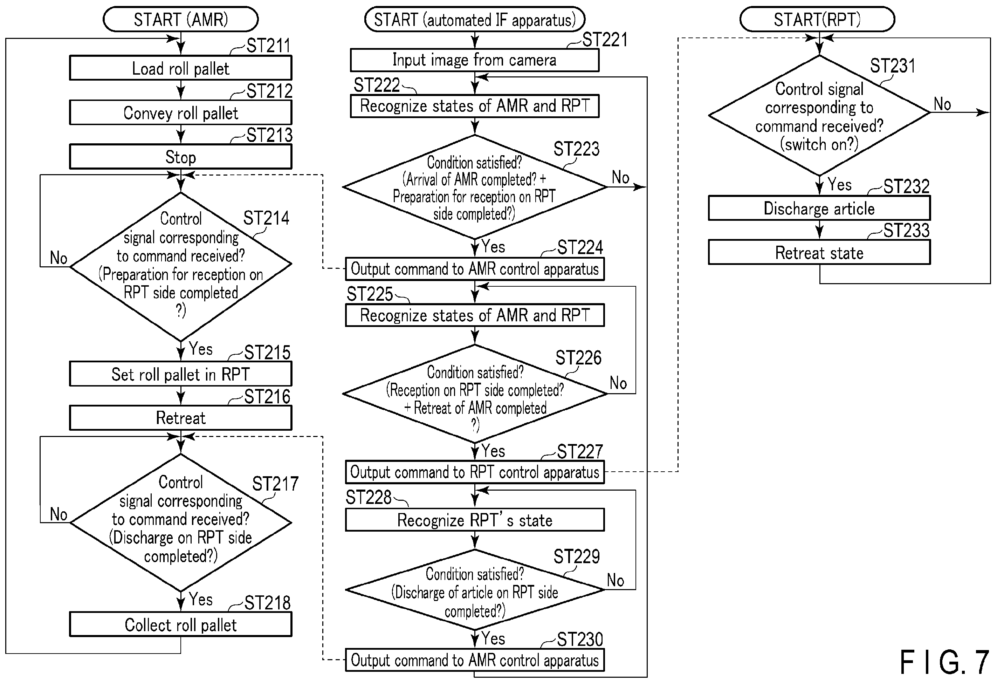

FIG. 7 is a flowchart showing an example of an operation of the warehouse system according to the second embodiment.

ST 211 to ST 218 show an example of an operation of the AMR 421, ST 221 to ST 230 show an example of an operation of the automated IF apparatus 5, and ST 231 to ST 233 show an example of an operation of the RPT 422.

First, an operation of the AMR 421 will be described.

The automated IF apparatus 5 transmits a command to the AMR control apparatus 321 based on an instruction from the WES 2 or a result of the recognition of an image from the camera 6. The AMR control apparatus 321 transmits a control signal for controlling the AMR 421 based on the command. The AMR 421 operates based on the control signal.

The AMR 421 moves to the first area and loads a roll pallet based on the control signal (ST 211). A person in charge may load a roll pallet onto the AMR 421.

Based on the control signal, the AMR 421 conveys the roll pallet from the first area to the second area (ST 212) and performs the first operation of stopping in the second area (ST 213). A person in charge may input an instruction of conveyance to the AMR 421 after loading the pallet on the AMR 421, so that the AMR 421 performs the first operation based on the input.

Further, upon receiving a control signal (first control signal) (ST 214, YES), the AMR 421 performs the second operation of setting the roll pallet in the RPT 422 (ST 215) and performs the third operation of retreating from the RPT 422 (ST 216) based on the received control signal.

Further, upon receiving a control signal (third control signal) (ST 217, YES), the AMR 421 performs the fourth operation of collecting the roll pallet set in the RPT 422 based on the received control signal (ST 218).

Next, an operation of the automated IF apparatus 5 will be described.

The input IF 521 of the automated IF apparatus 5 inputs an image from the camera 6 (ST 221).

The processor 51 inputs the image from the input IF 521, analyzes the image, and outputs a result of the analysis.

The processor 51 performs the first recognition process of recognizing states of the AMR 421 and the RPT 422 based on the result of the analysis and the dictionary data (ST 222).

The processor 51 determines whether or not the result of the first recognition process satisfies a predetermined condition (ST 223). The number of predetermined conditions is one or plural, and is determined according to the needs of the warehouse system.

For example, the predetermined conditions are conditions C21, C22, C23, and C24, and the processor 51 determines whether or not the conditions C21, C22, C23, and C24 are satisfied.

If the processor 51 determines that the predetermined conditions are satisfied (ST 223, YES), the processor 51 generates the first command for controlling the AMR 421 and outputs the first command (ST 224). For example, if the AMR 421 decelerates at a predetermined speed change and stops in the second area, the processor 51 determines that the conditions C21, C22, and C23 are satisfied (the conveyance of the roll pallet is completed). Further, if the RPT 422 is in a state of not receiving the roll pallet (empty state), the processor 51 determines that the condition C24 is satisfied (preparation for receiving the roll pallet is completed). The output IF 522 outputs the first command from the processor 51 to the AMR control apparatus 321 (ST 224).

The AMR control apparatus 321 receives the first command and outputs the first control signal based on the first command to an AMR 422. The AMR 422 performs the second operation based on the first control signal.

Further, the processor 51 performs the second recognition process of recognizing states of the AMR 421 and the RPT 422 based on the result of the analysis and the dictionary data (ST 225).

The processor 51 determines whether or not the result of the second recognition process satisfies a predetermined condition (ST 226). The number of predetermined conditions is one or plural, and is determined according to the needs of the warehouse system.

For example, if the number of predetermined conditions is two, the processor 51 determines whether or not a condition C25 indicating that the roll pallet is set in the RPT 422 is satisfied, and determines whether or not conditions C26, C27, and C28 indicating that the AMR 421 has retreated from the RPT 422 are satisfied.

If the processor 51 determines that the predetermined conditions are satisfied (ST 226, YES), the processor 51 generates the second command for controlling the RPT 422 and outputs the second command. For example, if the RPT 422 completes reception of the roll pallet, the processor 51 determines that the condition C25 is satisfied (the reception of the roll pallet is completed), and if the AMR 421 completes retreating, the processor 51 determines that the conditions C26, C27, and C28 are satisfied (the retreat is completed). The output IF 522 outputs the second command from the processor 51 to the RPT control apparatus 322 (ST 227).

The RPT control apparatus 322 receives the second command and outputs the second control signal based on the second command to the RPT 422. The RPT 422 performs the fifth operation based on the second control signal. Alternatively, the RPT 422 is switched on by the RPT control apparatus 322, which is a switch BOT, and performs the fifth operation based on the switch-on.

Further, the processor 51 performs the third recognition process of recognizing a state of the RPT 422 based on the result of the analysis and the dictionary data (ST 228).

The processor 51 determines whether or not the result of the third recognition process satisfies a predetermined condition (ST 229). The number of predetermined conditions is one or plural, and is determined according to the needs of the warehouse system.

For example, if the number of predetermined conditions is one, the processor 51 determines whether or not a condition C29 indicating that an article of the roll pallet set in the RPT 422 is discharged is satisfied.

If the processor 51 determines that the predetermined condition is satisfied (ST 229, YES), the processor 51 generates the third command for controlling the AMR 421 and outputs the third command. For example, if the RPT 422 completes discharging the article stored in the roll pallet, the processor 51 determines that the condition C29 is satisfied (the discharge of the article is completed). The output IF 522 outputs the third command from the processor 51 to the AMR control apparatus 321 (ST 230).

The AMR control apparatus 321 receives the third command and outputs the third control signal based on the third command to the AMR 421. The AMR 421 performs the fourth operation based on the third control signal.

Next, an operation of the LPT 422 will be described.

For example, the LPT 422 receives the roll pallet conveyed by the AMR 421 and enters a state in which the reception is completed. The AMR 421 having conveyed the roll pallet retreats to the retreat area and enters a retreating state. The automated IF apparatus 5 recognizes these states based on an image analysis and transmits the second command to the LPT control apparatus 322.

The LPT control apparatus 322 transmits the second control signal for controlling the LPT 422 based on the second command. The LPT 422 in the state in which the reception is completed receives the second control signal (ST 231, YES), and performs the fifth operation based on the received second control signal (ST 232). Alternatively, the LPT control apparatus 322, which is a switch BOT, switches on the LPT 422 based on the second command (ST 231, YES). The LPT 422 performs the fifth operation based on the switch-on (ST 232). That is, the LPT 422 tilts the roll pallet based on the second control signal or the switch-on to discharge the article stored in the roll pallet to the conveyor or the like (ST 232). The LPT 422 completes the discharge and enters a retreating state (ST 233).

The automated IF apparatus 5 recognizes the retreating state based on an image analysis and transmits the third command to the AMR control apparatus 321. The AMR control apparatus 321 transmits the third control signal for controlling the AMR 421 based on the third command. The AMR 421 performs the fourth operation of collecting the roll pallet from the LPT 422 based on the third control signal.

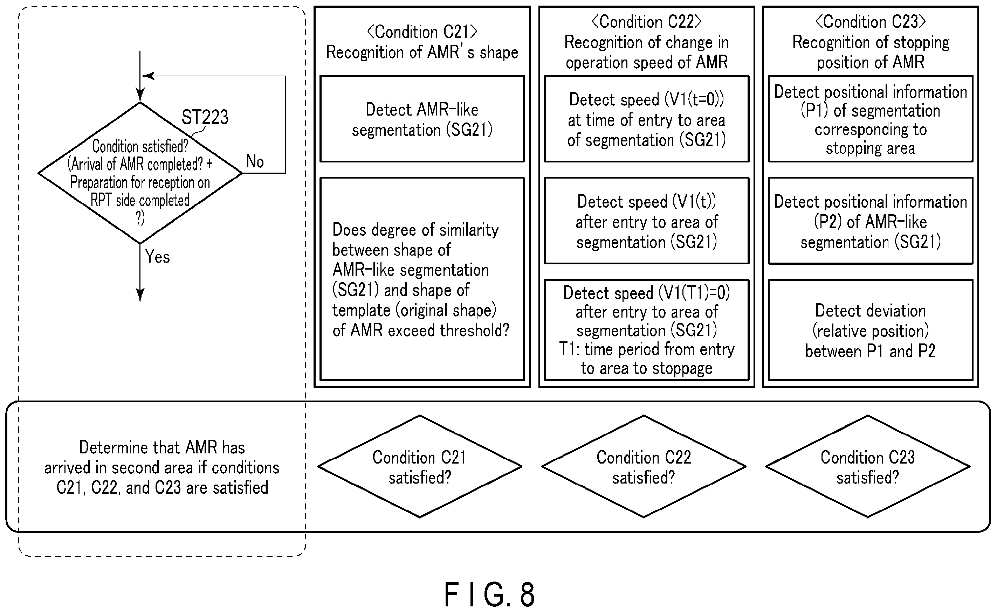

FIG. 8 is a diagram showing an example of recognition of a state of the AMR according to the second embodiment. That is, FIG. 8 is a diagram for explaining the conditions C21, C22, and C23 in ST 223 shown in FIG. 7.

Here, the processor 51 determines that the AMR 421 has arrived and stopped in the second area if the conditions C21, C22, and C23 are satisfied.

The condition C21 is the recognition of a shape of the AMR 421. The processor 51 detects an AMR 421-like segmentation (SG21) included in an image, and determines whether or not a degree of similarity between a shape of the segmentation (SG21) and a shape of a template (original shape) of the AMR 421 exceeds a threshold. The processor 51 determines that the condition C21 is satisfied if the degree of similarity exceeds the threshold.

AMR identification information recognition may be used in addition to or in place of the recognition of a shape of the AMR 421. All of the AMRs are provided with AMR identification information formed of a combination of characters, numerals, symbols, etc., or AMR identification information formed of a barcode or a two-dimensional code. The processor 51 recognizes the AMR identification information included in an image captured by the camera 6, collates the registered AMR identification information stored in the memory 53 with the recognized AMR identification information, and, if they match, determines that the condition C21 is satisfied and recognizes the AMR 421 as a predetermined AMR 421.

The condition C22 is the recognition of a change in the operation speed from the entrance to the stoppage of the AMR 421. The processor 51 detects the characteristics of the change in the operation speed. For example, the processor 51 detects a speed (V1 (t = 0)) at the time of the entry to the area of the segmentation (SG21) and a speed (V1 (t)) and (V1 (T1) = 0) after the entry to the area of the segmentation (SG21). T1 is a period of time from the time of the entry to the area of the segmentation (SG21) to the time of the stoppage.

The processor 51 recognizes the AMR 421 based on the characteristics of the change in the operation speed. For example, if the change in the operation speed satisfies a criterion, the processor 51 recognizes this change in the operation speed as the change in the operation speed of the AMR 421, and determines that the condition C22 is satisfied based on the recognition. For example, based on reference values v1, v2, t1, and t2, the processor 51 determines that the condition C22 is satisfied if v1 < V1 (0) < v2 and t1 < T1 < t2 are satisfied.

The condition C23 is the recognition of a stopping position of the AMR 421. The processor 51 recognizes the stoppage of the AMR 421 based on a positional relationship between a reference point of the stopping area and a reference point of the AMR 421. For example, the processor 51 detects positional information (P1) of a segmentation corresponding to the second area (stopping area), detects positional information (P2) of the AMR 421-like segmentation (SG21), and detects a deviation (relative position) between the reference points P1 and P2.

The processor 51 determines whether a distance between the centroid positions of the reference points P1 and P2 is within an expected certain value, that is, within a range from the lower limit to the upper limit. If the distance between the centroid positions is within the range from the lower limit to the upper limit, the processor 51 recognizes the stoppage of the AMR 421 and determines that the condition C23 is satisfied based on the recognition.

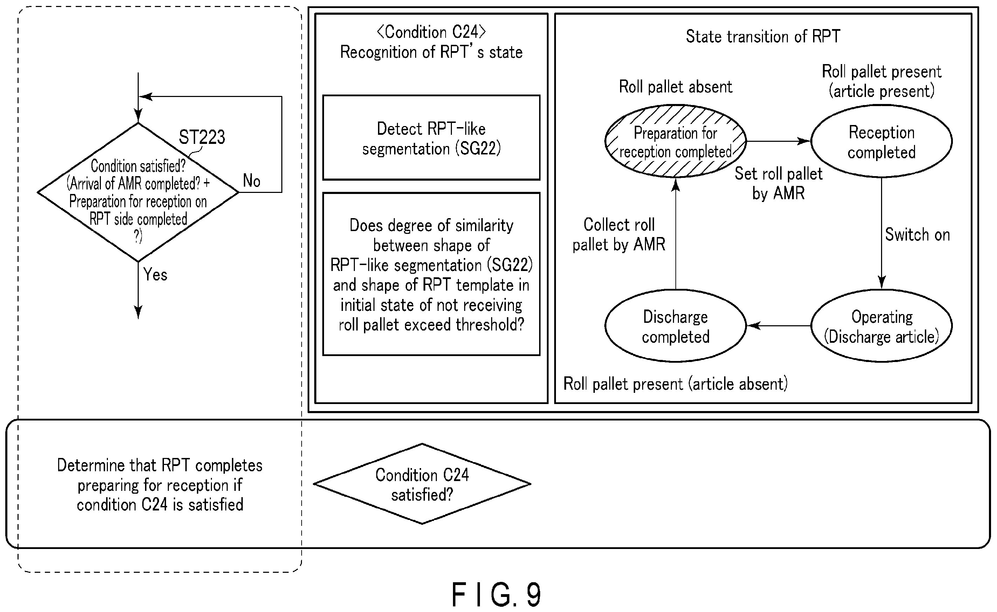

FIG. 9 is a diagram showing an example of recognition of a state (completion of reception preparation) of an RPT according to the second embodiment. That is, FIG. 9 is a diagram for explaining the condition C24 in ST 223 shown in FIG. 7.

The processor 51 determines whether or not the condition C24 is satisfied. The condition C24 is the recognition of a state of the RPT 422. The memory 53 stores a template (without a roll pallet) in an initial state in which the RPT 422 does not receive the roll pallet. The processor 51 detects an RPT 422-like segmentation (SG22) included in an image, and determines whether or not a degree of similarity between a shape of the segmentation (SG22) and a shape of a template in an initial state exceeds a threshold. The processor 51 determines that the condition C24 is satisfied if the degree of similarity exceeds the threshold. That is, the processor 51 determines that the RPT 422 is in the initial state of not receiving the roll pallet, and determines that the RPT 422 is now ready to receive the roll pallet.

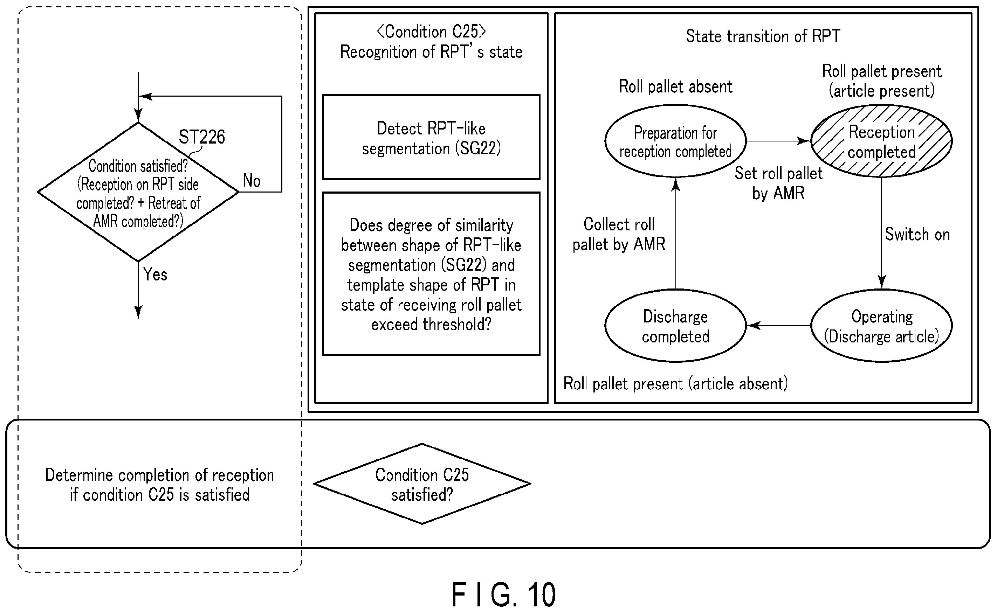

FIG. 10 is a diagram showing an example of recognition of a state (completion of reception) of an RPT according to the second embodiment. That is, the condition C25 in ST 226 shown in FIG. 7 will be explained.

The processor 51 determines whether or not the condition C25 is satisfied. The condition C25 is the recognition of a state of the RPT 422. The memory 53 stores a template in a reception-completion state in which the RPT 422 receives the roll pallet. The processor 51 detects the RPT 422-like segmentation (SG22) included in an image, and determines whether or not a degree of similarity between a shape of the segmentation (SG22) and a shape of a template in the reception-completion state exceeds a threshold. The processor 51 determines that the condition C25 is satisfied if the degree of similarity exceeds the threshold. That is, the processor 51 determines that the RPT 422 completes reception of the roll pallet.

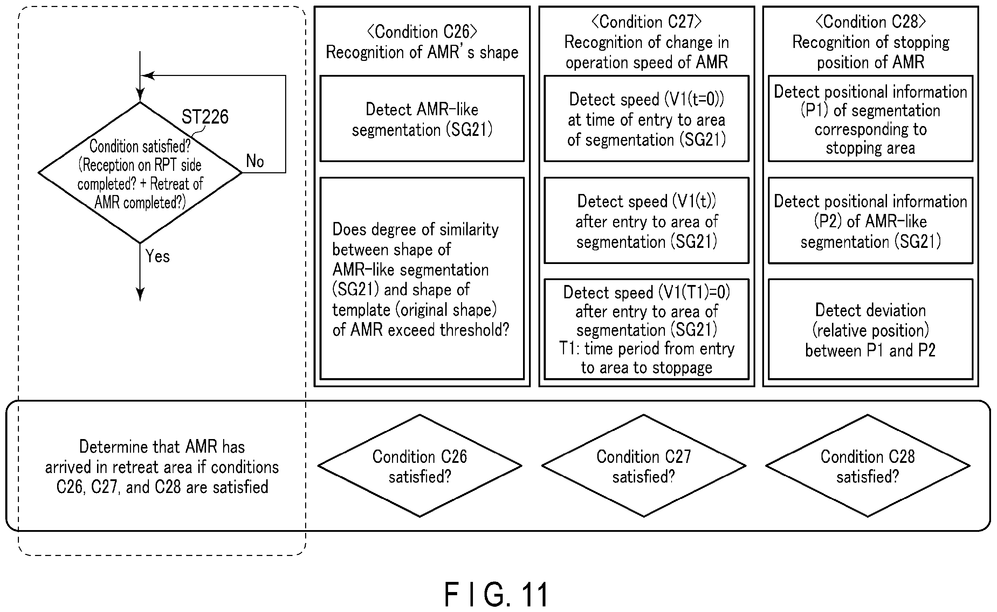

FIG. 11 is a diagram showing an example of recognition of a state (completion of retreat) of the AMR according to the second embodiment. That is, FIG. 11 is a diagram for explaining the conditions C26, C27, and C28 in ST 226 shown in FIG. 7.

Here, the processor 51 determines that the AMR 421 has arrived and retreated in the retreat area if the conditions C26, C27, and C28 are satisfied.

The condition C26 is the recognition of a shape of the AMR 421. The processor 51 detects an AMR 421-like segmentation (SG21) included in an image, and determines whether or not a degree of similarity between a shape of the segmentation (SG21) and a shape of a template (original shape) of the AMR 421 exceeds a threshold. The processor 51 determines that the condition C26 is satisfied if the degree of similarity exceeds the threshold.

The condition C27 is the recognition of a change in the operation speed from the entrance to the stoppage of the AMR 421. The processor 51 detects the characteristics of the change in the operation speed. For example, the processor 51 detects a speed (V1 (t = 0)) at the time of the entry to the area of the segmentation (SG21) and a speed (V1 (t)) and (V1 (T1) = 0) after the entry to the area of the segmentation (SG21). T1 is a period of time from the time of the entry to the area of the segmentation (SG21) to the time of the stoppage.

The processor 51 recognizes the AMR 421 based on the characteristics of the change in the operation speed. For example, if the change in the operation speed satisfies a criterion, the processor 51 recognizes this change in the operation speed as the change in the operation speed of the AMR 421, and determines that the condition C27 is satisfied based on the recognition. For example, based on reference values v1, v2, t1, and t2, the processor 51 determines that the condition C27 is satisfied if v1 < V1 (0) < v2 and t1 < T1 < t2 are satisfied.

The condition C28 is the recognition of a stopping position of the AMR 421. The processor 51 recognizes the stoppage of the AMR 421 based on a positional relationship between a reference point of the stopping area and a reference point of the AMR 421. For example, the processor 51 detects positional information (P1) of a segmentation corresponding to the retreat area, detects positional information (P2) of the AMR 421-like segmentation (SG21), and detects a deviation (relative position) between the reference points P1 and P2.

The processor 51 determines whether a distance between the centroid positions of the reference points P1 and P2 is within an expected certain value, that is, within a range from the lower limit to the upper limit. If the distance between the centroid positions is within the range from the lower limit to the upper limit, the processor 51 recognizes the stoppage of the AMR 421 and determines that the condition C28 is satisfied based on the recognition.

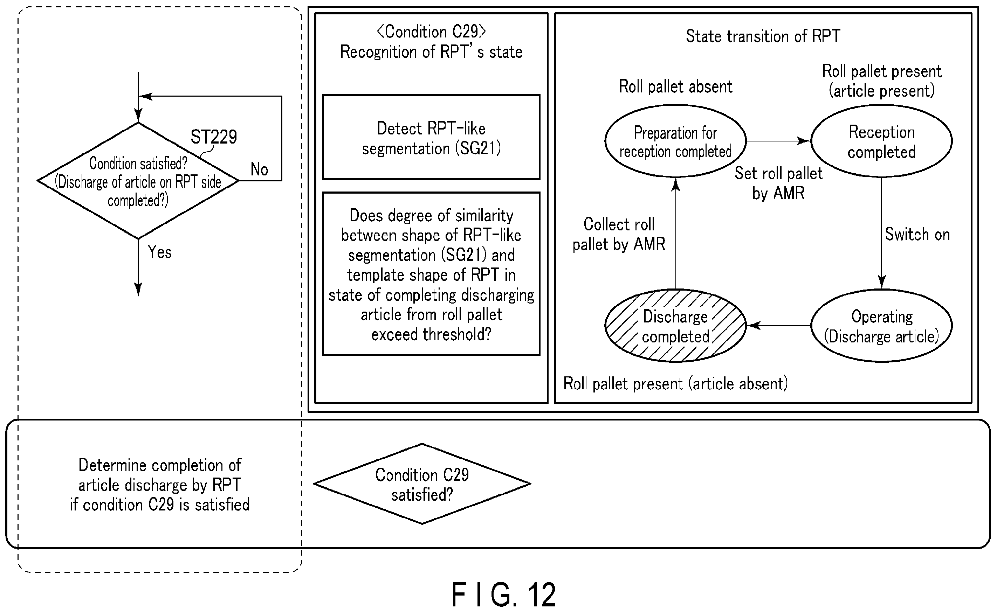

FIG. 12 is a diagram showing an example of recognition of a state (completion of article discharge) of the RPT according to the second embodiment. That is, FIG. 12 is a diagram for explaining the condition C29 of the ST 229 shown in FIG. 7.

The processor 51 determines whether or not the condition C29 is satisfied. The condition C29 is the recognition of a state of the RPT 422. The memory 53 stores a template in a state in which the RPT 422 completes discharging an article from the roll pallet (a state of receiving the empty roll pallet). After outputting the second command to the RPT control apparatus 322 (ST 227), the processor 51 detects the RPT 422-like segmentation (SG22) included in an image over a certain period of time, and determines whether or not a degree of similarity between a shape of the segmentation (SG22) and a shape of a template in the state in which the RPT 422 completes discharging an article from the roll pallet exceeds a threshold. After outputting the second command to the RPT control apparatus 322, the processor 51 determines that the condition C29 is satisfied if the degree of similarity exceeds the threshold with the condition on time being within a certain period of time. That is, the processor 51 determines that the RPT 422 completes discharging an article from the roll pallet.

As described above, the automated IF apparatus 5 of the second embodiment uses an image captured by the camera 6 as an input to output signals such as API commands for controlling apparatuses such as the AMR 421 and the RPT 422. The automated IF apparatus 5 analyzes the input image, recognizes a state (state transition) of each apparatus based on the result of the analysis, and outputs a signal such as an API command for controlling a predetermined apparatus based on the result of the recognition.

If each of the control apparatuses such as the AMR control apparatus 321 and the RPT control apparatus 322 for controlling each apparatus includes an API, it is not necessary to modify the IF of each of the control apparatuses. In this manner, according to the second embodiment, in the case where the operations of the apparatuses are coordinated, the coordination load can be reduced. Also, by making the automated IF apparatus 5 independent from the WES 2, it is possible to make the apparatuses operate in cooperation with each other even if a system failure occurs in the WES 2.

### <Third Embodiment>

Hereinafter, a third embodiment will be described with reference to the drawings. The components denoted by the same reference numerals as those used in the first embodiment are substantially the same as those in the first embodiment, and the description thereof will be appropriately omitted.

### [Configuration]

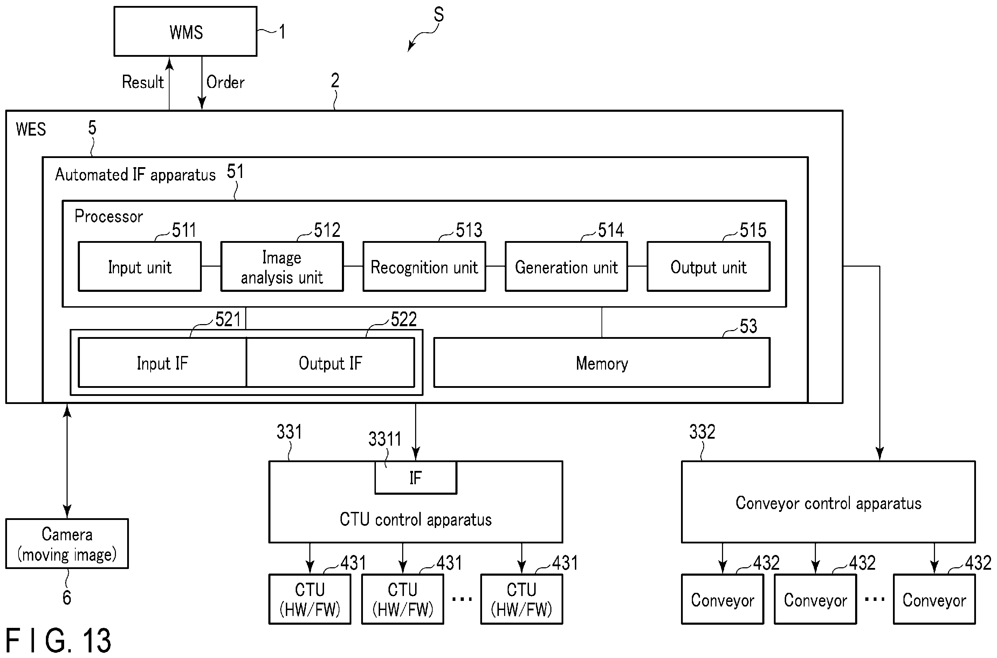

FIG. 13 is a conceptual diagram showing an example of a warehouse system according to the third embodiment.

In the third embodiment, an automated IF apparatus 5 is configured to input an image from a camera 6, analyze the image, perform a recognition process of recognizing a state of an object of conveyance based on a result of the image analysis, and output a signal for controlling a first apparatus that conveys the object of conveyance based on the recognition process.

For example, the automated IF apparatus 5 is configured to perform a first recognition process of recognizing a state of an object of conveyance conveyed by a conveyor 432 based on a result of the image analysis, and output a first signal for controlling a CTU 431 based on the first recognition process.

The automated IF apparatus 5 can make the conveyance by the conveyor 432 and the CTU 431 be coordinated with each other by outputting the first signal.

As shown in FIG. 13, the article processing system S includes a WMS 1, a WES 2, a CTU control apparatus 331, a conveyor control apparatus 332, a CTU (hardware/firmware) 431, the conveyor 432, the automated IF apparatus 5, and the camera 6.

The CTU control apparatus 331 can be configured by one or more general-purpose computers, that is, an IF, a processor, a memory, and the like. The processor is a CPU, an MPU, a DSP, or the like. For example, the CTU control apparatus 331 includes an IF 3311, and the IF 3311 is configured to receive the first signal output from the automated IF apparatus 5. For example, the first signal is a first command, and the first command is an API command. The IF 3311 is an API. The CTU control apparatus 331 is configured to output a first control signal for controlling the CTU 431 based on the received first command.

The conveyor control apparatus 332 can be configured by one or more dedicated apparatuses, PLCs, or general-purpose computers, that is, an IF, a processor, a memory, and the like. The processor is a CPU, an MPU, a DSP, or the like. For example, the conveyor control apparatus 332 is configured to receive a second signal output from the automated IF apparatus 5, and output a second control signal for controlling the conveyor 432 based on the second signal. The conveyor control apparatus 332 may not receive the output from the automated IF apparatus 5.

The CTU 431 includes a fork mechanism that moves in the vertical direction. The CTU 431 is configured to perform a first operation based on the first control signal from the CTU control apparatus 331. For example, as the first operation, the CTU 431 travels toward the conveyor 432, stops in an area facing the terminal end of the conveyor 432, adjusts the height of the fork mechanism according to the height of the conveyor 432, receives an object of conveyance stopping at the terminal end of the conveyor 432 with the fork mechanism, and conveys the received object of conveyance to a predetermined area.

The conveyor 432 conveys an object of conveyance set in a position where the conveyance is started toward the terminal end based on a control signal from the conveyor control apparatus 332. The conveyor 432 includes a plurality of sensors along a conveyance path, and detects the object of conveyance that is conveyed. The conveyor 432 starts or stops conveying an object of conveyance based on the result of the detection of the object of conveyance. The object of conveyance is an article.

### [Operation]

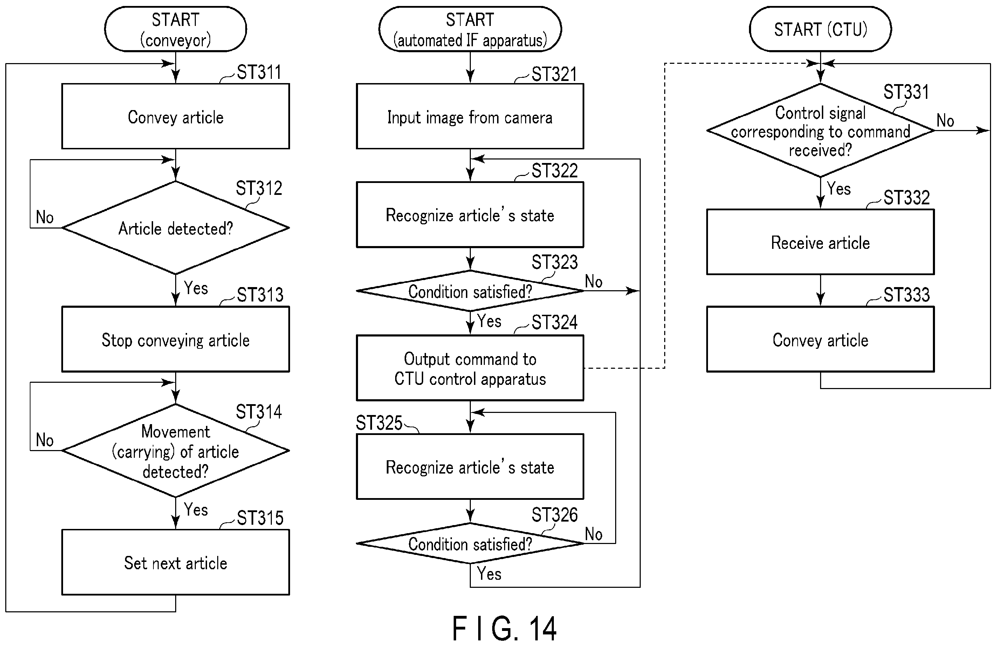

FIG. 14 is a flowchart showing an example of an operation of the warehouse system according to the third embodiment.

ST 311 to ST 315 show an example of an operation of the conveyor 432, ST 321 to ST 326 show an example of an operation of the automated IF apparatus 5, and ST 331 to ST 333 show an example of an operation of the CTU 431.

First, an operation of the conveyor 432 will be described.

The conveyor 432 conveys an article set in a position where the conveyance is started toward the terminal end based on a control signal from the conveyor control apparatus 332 (ST 311). The conveyor 432 detects the conveyed article based on signals from the sensors. If the conveyor 432 detects the article approaching the terminal end (ST 312, YES), the conveyor 432 stops conveying the article (ST 313). The article is located at the terminal end.

The conveyor 432 detects the article located at the terminal end based on signals from the sensors. If the conveyor 432 detects the movement (carrying) of the article located at the terminal end (ST 314, YES), the conveyor 432 sets the next article in the position where the conveyance is started (ST 315).

Next, an operation of the automated IF apparatus 5 will be described.

The input IF 521 of the automated IF apparatus 5 inputs an image from the camera 6 (ST 321).

The processor 51 inputs the image from the input IF 521, analyzes the image, and outputs a result of the analysis.

The processor 51 performs the first recognition process of recognizing a state (presence or absence) of an article on the conveyor 432 based on the result of the analysis and the dictionary data (ST 322).

The processor 51 determines whether or not the result of the first recognition process satisfies a predetermined condition (ST 323). The number of predetermined conditions is one or plural, and is determined according to the needs of the warehouse system.

For example, if the number of predetermined conditions is one, the processor 51 determines whether or not a condition C31 for recognizing the article is satisfied. If the number of predetermined conditions is two, the processor 51 determines whether or not the change in the operation speed of the article satisfies a condition C32 in addition to the condition C31. Alternatively, the processor 51 determines whether or not the area in which the article is stopped satisfies a condition C33 in addition to the condition C31. If the number of predetermined conditions is three, the processor 51 determines whether or not the conditions C31, C32, and C33 are satisfied.

If the processor 51 determines that the predetermined conditions are satisfied (ST 323, YES), the processor 51 generates the first command for controlling the CTU 431 and outputs the first command. For example, if the article decelerates at a predetermined speed change and stops in the stopping area, the processor 51 determines that the conditions C31, C32, and C33 are satisfied. The output IF 522 outputs the first command from the processor 51 to the CTU control apparatus 331 (ST 324).

The CTU control apparatus 331 receives the first command and outputs the first control signal based on the first command to the CTU 431. The CTU 431 performs the first operation based on the first control signal.

Further, the processor 51 performs the second recognition process of recognizing a state of an article on the conveyor 432 based on the result of the analysis and the dictionary data (ST 325). For example, if the article stopped in the stopping area is carried by the CTU 431, the processor 51 determines that the predetermined condition is satisfied (ST 326, YES), and performs the first recognition process again (ST 322).

Next, an operation of the CTU 431 will be described.

The automated IF apparatus 5 transmits a command to the CTU control apparatus 331 based on a result of the recognition of an image from the camera 6. The CTU control apparatus 331 transmits a control signal for controlling the CTU 431 based on the command. The CTU 431 operates based on the control signal.

For example, the CTU 431 in the retreat state receives the first control signal from the CTU control apparatus 331 (ST 331, YES), and, based on the first control signal, travels toward the conveyor 432, stops in an area facing the terminal end of the conveyor 432, adjusts the height of the fork mechanism according to the height of the conveyor 432, and receives an article stopping at the terminal end of the conveyor 432 with the fork mechanism (ST 332). The CTU 431 conveys the received article to a predetermined area (ST 333).

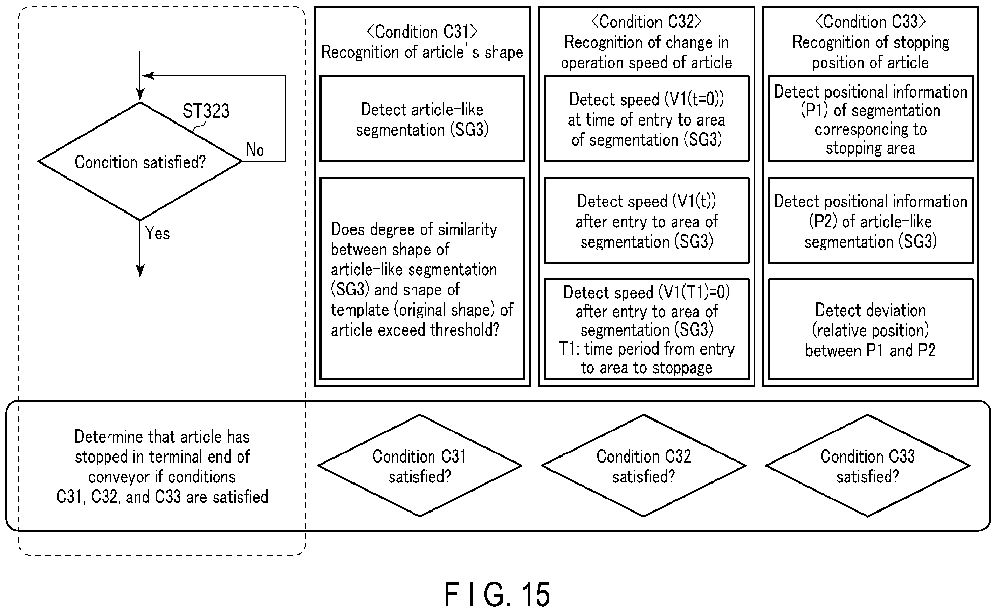

FIG. 15 is a diagram showing an example of recognition of a state of an article according to the third embodiment. That is, FIG. 15 is a diagram for explaining ST 323 shown in FIG. 14.

Here, the processor 51 determines that an article has arrived and stopped in a stopping area if the conditions C31, C32, and C33 are satisfied.

The condition C31 is the recognition of a shape of the article. The processor 51 detects an article-like segmentation (SG3) included in an image, and determines whether or not a degree of similarity between a shape of the segmentation (SG3) and a shape of a template (original shape) of the article exceeds a threshold. The processor 51 determines that the condition C31 is satisfied if the degree of similarity exceeds the threshold.

Article identification information recognition may be used in addition to or in place of the recognition of a shape of the article. All of the articles are provided with article identification information formed of a combination of characters, numerals, symbols, etc., or article identification information formed of a barcode or a two-dimensional code. The processor 51 recognizes the article identification information included in an image captured by the camera 6, collates the registered article identification information stored in the memory 53 with the recognized article identification information, and, if they match, determines that the condition C31 is satisfied and recognizes the article as a predetermined article.

The condition C32 is the recognition of a change in the operation speed from the entrance to the stoppage of the article. The processor 51 detects the characteristics of the change in the operation speed. For example, the processor 51 detects a speed (V1 (t = 0)) at the time of the entry to the area of the segmentation (SG3) and a speed (V1 (t)) and (V1 (T1) = 0) after the entry to the area of the segmentation (SG3). T1 is a period of time from the time of the entry to the area of the segmentation (SG3) to the time of the stoppage.

The processor 51 recognizes the article based on the characteristics of the change in the operation speed. For example, if the change in the operation speed satisfies a criterion, the processor 51 recognizes this change in the operation speed as the change in the operation speed of the article, and determines that the condition C32 is satisfied based on the recognition. For example, based on reference values v1, v2, t1, and t2, the processor 51 determines that the condition C32 is satisfied if v1 < V1 (0) < v2 and t1 < T1 < t2 are satisfied.

The condition C33 is the recognition of a stopping position of the article. The processor 51 recognizes the stoppage of the article based on a positional relationship between a reference point of the stopping area and a reference point of the article. For example, the processor 51 detects positional information (P1) of a segmentation corresponding to the stopping area, detects positional information (P2) of the article-like segmentation (SG3), and detects a deviation (relative position) between the reference points P1 and P2.

The processor 51 determines whether a distance between the centroid positions of the reference points P1 and P2 is within an expected certain value, that is, within a range from the lower limit to the upper limit. If the distance between the centroid positions is within the range from the lower limit to the upper limit, the processor 51 recognizes the stoppage of the article and determines that the condition C33 is satisfied based on the recognition.

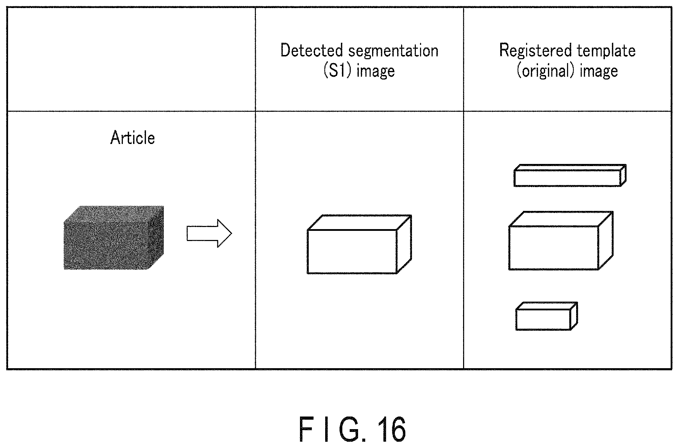

FIG. 16 is a diagram showing an example of recognition of a shape of an article according to the third embodiment.

The memory 53 registers (stores) the images of the templates (original images) of all of the articles or a predetermined article(s). The processor 51 collates the image of the detected segmentation (SG3) with the registered images of the templates. The processor 51 recognizes the detected segmentation (SG3) as the article if a degree of similarity between the image of the detected segmentation (SG3) and the image of the template of the article exceeds a threshold. The processor 51 recognizes the detected segmentation (SG3) as not being the article if the degree of similarity between the image of the detected segmentation (SG3) and the image of the template of the article does not exceed the threshold.

As described above, the automated IF apparatus 5 of the third embodiment uses an image captured by the camera 6 as an input to output signals such as API commands for controlling apparatuses such as the CTU 431. The automated IF apparatus 5 analyzes the input image, recognizes a state (state transition) of an object of conveyance based on the result of the analysis, and outputs a signal such as an API command for controlling apparatuses such as the CTU 431 based on the result of the recognition. If apparatuses such as the CTU 431 include an API, it is not necessary to modify the IF of the apparatuses. In this manner, according to the third embodiment, the coordination load of the apparatuses can be reduced. Also, by making the automated IF apparatus 5 independent from the WES 2, it is possible to make each apparatus continue operating even if a system failure occurs in the WES 2.

### <Fourth Embodiment>

Hereinafter, a fourth embodiment will be described with reference to the drawings. The components denoted by the same reference numerals as those used in the first embodiment are substantially the same as those in the first embodiment, and the description thereof will be appropriately omitted.

### [Configuration]

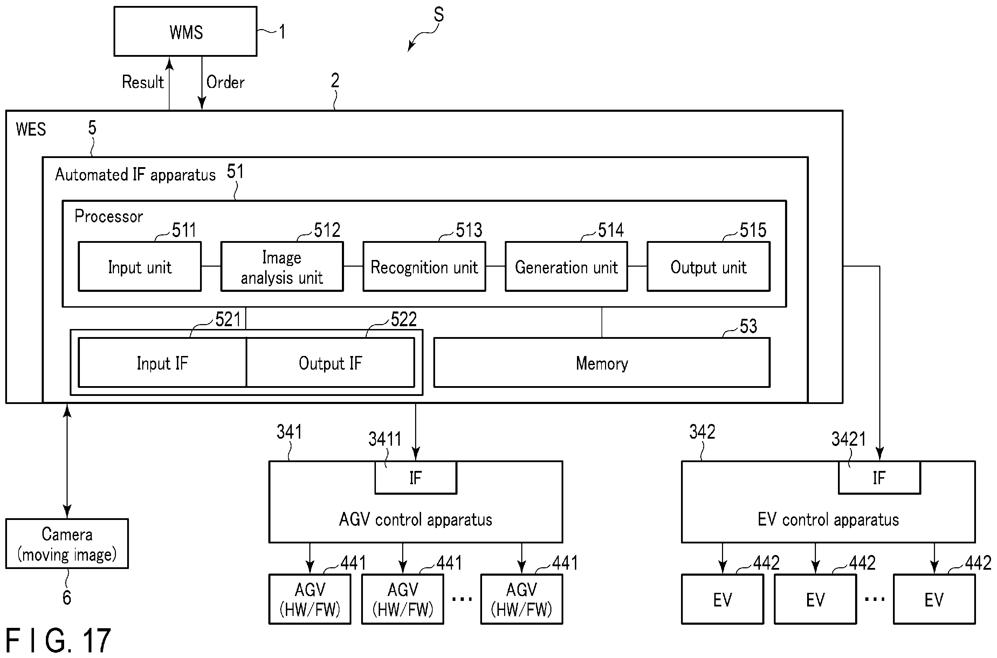

FIG. 17 is a conceptual diagram showing an example of a warehouse system according to the fourth embodiment.

In the fourth embodiment, an automated IF apparatus 5 is configured to input an image from a camera 6, analyze the image, perform a recognition process of recognizing a state of at least one of a first apparatus or a second apparatus that processes an object of conveyance based on a result of the image analysis, and output a signal for controlling at least one of the first or second apparatus based on the recognition process. The automated IF apparatus 5 can cause an AGV 441, which is an example of the first apparatus, and an EV (elevator) 442, which is an example of the second apparatus, to operate in cooperation with each other by outputting a signal.

As shown in FIG. 17, the article processing system S includes a WMS 1, a WES 2, an AGV control apparatus 341, an EV control apparatus 342, the AGV (hardware/firmware) 441, the EV 442, the automated IF apparatus 5, and the camera 6. The camera 6 is installed on each floor and inside the EV 442, and is configured to capture images of the doorway to the EV 442 on each floor and images of the inside of the EV 442.

The AGV control apparatus 341 can be configured by one or more general-purpose computers, that is, an IF, a processor, a memory, and the like. The processor is a CPU, an MPU, a DSP, or the like. For example, the AGV control apparatus 341 includes an IF 3411, and the IF 3411 is configured to receive a signal (e.g., an API command) output from the automated IF apparatus 5 and output a control signal for controlling the AGV 441 based on the received command.

The EV control apparatus 342 can be configured by one or more dedicated apparatuses, PLCs, or general-purpose computers, that is, an IF, a processor, a memory, and the like. The processor is a CPU, an MPU, a DSP, or the like. For example, the EV control apparatus 342 includes an IF 3421, and the IF 3421 is configured to receive a signal (e.g., an API command) output from the automated IF apparatus 5 and output a control signal for controlling the EV 442.

### [Operation]

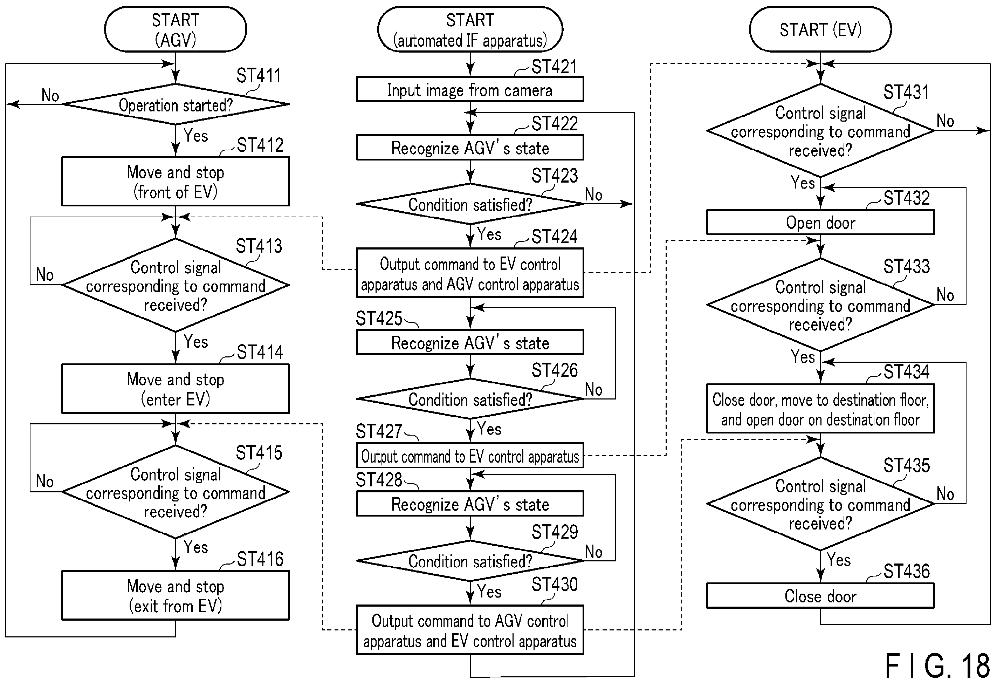

FIG. 18 is a flowchart showing an example of an operation of the warehouse system according to the fourth embodiment.

ST 411 to ST 416 show an example of an operation of the AGV 441, ST 421 to ST 430 show an example of an operation of the automated IF apparatus 5, and ST 431 to ST 436 show an example of an operation of the EV 442.

First, an operation of the AGV 441 will be described.

The AGV 441 starts operating based on a control signal from the AGV control apparatus 341 (ST 411), moves to a first area, which is a target area, and stops (ST 412). For example, the first area is the front of the doorway to the EV 442.

The AGV 441 also receives a second control signal corresponding to a second command (ST 413, YES), moves to a second area, which is a target area, and stops (ST 414). For example, the second area is a predetermined area in the EV 442, and the AGV 441 enters the EV 442 and stops based on the second control signal.

The AGV 441 also receives the second control signal corresponding to the second command (ST 415, YES), moves to a third area, which is a target area, and stops (ST 416). For example, the third area is a predetermined area outside the EV 442, and the AGV 441 exits from the EV 442 and stops based on the second control signal.

Next, an operation of the automated IF apparatus 5 will be described.

The input IF 521 of the automated IF apparatus 5 inputs an image from the camera 6 (ST 421).

The processor 51 inputs the image from the input IF 521, analyzes the image, and outputs a result of the analysis. The processor 51 performs a first recognition process of recognizing a state of the AGV 441 based on the result of the analysis and the dictionary data (ST 422).

The processor 51 determines whether or not the result of the first recognition process satisfies a predetermined condition (ST 423). The number of predetermined conditions is one or plural, and is determined according to the needs of the warehouse system.

If the processor 51 determines that the predetermined condition(s) is(are) satisfied (ST 423, YES), the processor 51 generates a first command for controlling the EV 442, generates a second command for controlling the AGV 441, and outputs the first and second commands. For example, if the AGV 441 decelerates at a predetermined speed change and stops in the first area, the processor 51 determines that the predetermined condition(s) is(are) satisfied. The output IF 522 outputs the first command from the processor 51 to the EV control apparatus 342, and outputs the second command to the AGV control apparatus 341 (ST 424).

The processor 51 recognizes the AGV 441 stopping in the first area based on an AGV traveling plan stored in the memory 53. For example, the processor 51 recognizes the destination (destination floor) of the AGV 441 stopping in the first area based on the match between the predetermined AGV identification information included in the AGV traveling plan and the AGV identification information read from the result of the image analysis and the destination floor included in the AGV traveling plan, and generates a third command.

The EV control apparatus 342 receives the first command and outputs a first control signal based on the first command to the EV 442. The EV 442 performs a first operation based on the first control signal to open the door.

The AGV control apparatus 341 receives the second command and outputs a second control signal based on the second command to the AGV 441. The AGV 441 performs a second operation based on the second control signal and enters the EV 442 and stops.

Further, the processor 51 performs a second recognition process of recognizing a state of the AGV 441 based on the result of the analysis and the dictionary data (ST 425).

The processor 51 determines whether or not the result of the second recognition process satisfies a predetermined condition (ST 426). The number of predetermined conditions is one or plural, and is determined according to the needs of the warehouse system.

If the processor 51 determines that the predetermined condition(s) is(are) satisfied (ST 426, YES), the processor 51 outputs the third command. For example, if the AGV 441 decelerates at a predetermined speed change and stops in the second area, the processor 51 determines that the predetermined condition(s) is(are) satisfied. The output IF 522 outputs the third command from the processor 51 to the EV control apparatus 342 (ST 427).

The EV control apparatus 342 receives the third command and outputs a third control signal based on the third command to the EV 442. The EV 442 performs a third operation based on the third control signal to close the door, move to the destination floor, stop at the destination floor, and open the door.

Further, the processor 51 performs a fourth recognition process of recognizing a state of the AGV 441 based on the result of the analysis and the dictionary data (ST 428).

The processor 51 determines whether or not the result of the fourth recognition process satisfies a predetermined condition (ST 429). The number of predetermined conditions is one or plural, and is determined according to the needs of the warehouse system.

If the processor 51 determines that the predetermined condition(s) is(are) satisfied (ST 429, YES), the processor 51 generates a fourth command for controlling the AGV 441, generates a fifth command for controlling an EV 432, and outputs the fourth and fifth commands. For example, if the AGV 441 stops in the second area and the door of the EV 432 is open, the processor 51 determines that the predetermined condition(s) is(are) satisfied. The output IF 522 outputs the fourth command from the processor 51 to the AGV control apparatus 341, and outputs the fifth command from the processor 51 to the EV control apparatus 342 (ST 430).

The AGV control apparatus 341 receives the fourth command and outputs a fourth control signal based on the fourth command to the AGV 441. The AGV 441 performs a fourth operation based on the fourth control signal, exits from the EV 442, and stops.

The EV control apparatus 342 receives the fifth command and outputs a fifth control signal based on the fifth command to the EV 442. The EV 442 performs a fifth operation based on the fifth control signal to close the door.

Next, an operation of the EV 442 will be described.

For example, the EV 442 in a stopped state receives the first control signal from the EV control apparatus 342 (ST 431, YES), and performs the first operation based on the first control signal to open the door (ST 432).

After the door is opened, the AGV 441 performs the second operation based on the second control signal to enter the EV 442 and stop.

Subsequently, the EV 442 receives the third control signal from the EV control apparatus 342 (ST 433, YES), and performs the third operation based on the third control signal to close the door, move to the destination floor, stop at the destination floor, and open the door (ST 434).

After the door is opened, the AGV 441 performs the fourth operation based on the fourth control signal to exit from the EV 442 and stop.

Subsequently, the EV 442 receives the fifth control signal from the EV control apparatus 342 (ST 435, YES), and performs the fifth operation based on the fifth control signal to close the door (ST 436).

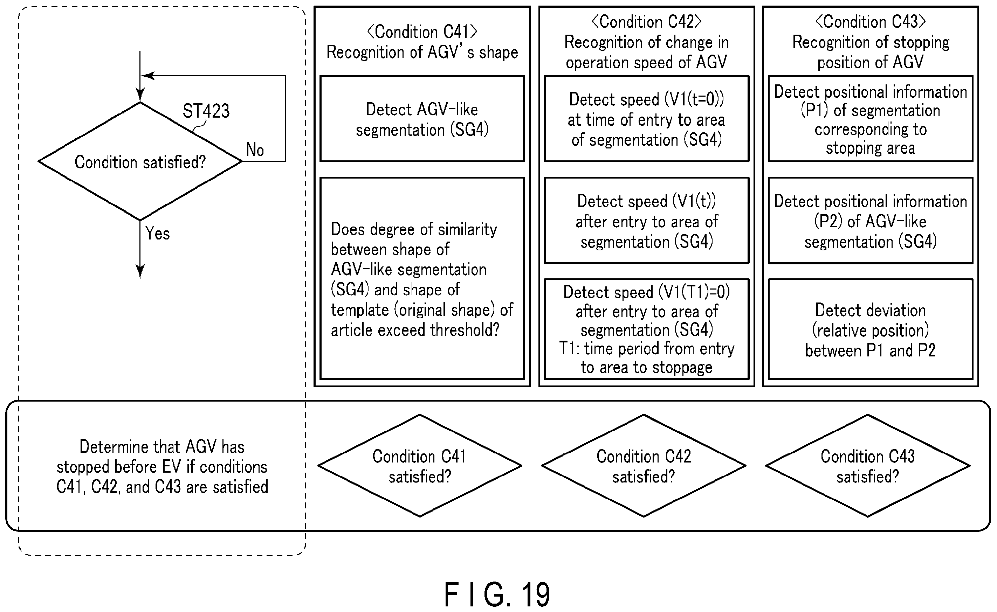

FIG. 19 is a diagram showing an example of recognition of a state of the AGV according to the fourth embodiment. That is, FIG. 19 is a diagram for explaining ST 422 and the like shown in FIG. 18.

Here, the processor 51 determines that the AGV has arrived and stopped in a stopping area if conditions C41, C42, and C43 are satisfied.

The condition C41 is the recognition of a shape of the AGV. The processor 51 detects an AGV 441-like segmentation (SG4) included in an image, and determines whether or not a degree of similarity between a shape of the segmentation (SG4) and a shape of a template (original shape) of the AGV 441 exceeds a threshold. The processor 51 determines that the condition C41 is satisfied if the degree of similarity exceeds the threshold.

AGV identification information recognition may be used in addition to or in place of the recognition of a shape of the AGV 441. All of the AGVs 441 are provided with AGV identification information formed of a combination of characters, numerals, symbols, etc., or AGV identification information formed of a barcode or a two-dimensional code. The processor 51 recognizes the AGV identification information included in an image captured by the camera 6, collates the registered AGV identification information stored in the memory 53 with the recognized AGV identification information, and, if they match, determines that the condition C41 is satisfied and recognizes the AGV 441 as a predetermined AGV 441.

The condition C42 is the recognition of a change in the operation speed from the entrance to the stoppage of the AGV 441. The processor 51 detects the characteristics of the change in the operation speed. For example, the processor 51 detects a speed (V1 (t = 0)) at the time of the entry to the area of the segmentation (SG4) and a speed (V1 (t)) and (V1 (T1) = 0) after the entry to the area of the segmentation (SG4). T1 is a period of time from the time of the entry to the area of the segmentation (SG4) to the time of the stoppage.

The processor 51 recognizes the AGV 441 based on the characteristics of the change in the operation speed. For example, if the change in the operation speed satisfies a criterion, the processor 51 recognizes this change in the operation speed as the change in the operation speed of the AGV 441, and determines that the condition C42 is satisfied based on the recognition. For example, based on reference values v1, v2, t1, and t2, the processor 51 determines that the condition C42 is satisfied if v1 < V1 (0) < v2 and t1 < T1 < t2 are satisfied.

The condition C43 is the recognition of a stopping position of the AGV 441. The processor 51 recognizes the stoppage of the AGV 441 based on a positional relationship between a reference point of the stopping area and a reference point of the AGV 441. For example, the processor 51 detects positional information (P1) of a segmentation corresponding to the stopping area, detects positional information (P2) of the AGV 441-like segmentation (SG4), and detects a deviation (relative position) between the reference points P1 and P2.

The processor 51 determines whether a distance between the centroid positions of the reference points P1 and P2 is within an expected certain value, that is, within a range from the lower limit to the upper limit. If the distance between the centroid positions is within the range from the lower limit to the upper limit, the processor 51 recognizes the stoppage of the AGV 441 and determines that the condition C43 is satisfied based on the recognition.

As described above, the automated IF apparatus 5 of the fourth embodiment uses an image captured by the camera 6 as an input to output signals such as API commands for controlling apparatuses such as the AGV 441 and the EV 442. The automated IF apparatus 5 analyzes the input image, recognizes a state (state transition) of the AGV 441 based on the result of the analysis, and outputs a signal such as an API command for controlling apparatuses such as the AGV 441 and the EV 442 based on the result of the recognition. If apparatuses such as the AGV control apparatus 341 and the EV control apparatus 342 include an API, it is not necessary to modify the IF of each of the apparatuses. In this manner, according to the fourth embodiment, the coordination load of the apparatuses can be reduced. Also, by making the automated IF apparatus 5 independent from the WES 2, it is possible to make each apparatus continue operating even if a system failure occurs in the WES 2.

The program according to the present embodiment may be transferred in a state of being stored in electronic equipment such as the automated IF apparatus 5 or in a state of not being stored in the electronic equipment. In the latter case, the program may be transferred through a network or may be transferred in a state of being stored in a storage medium. The storage medium is a non-transitory tangible medium. The storage medium is a computer-readable medium. The storage medium may be of any type, such as an optical disc or a memory card, as long as it can store programs and can be read by the computer. The electronic equipment downloads a program transferred (provided) via a network and installs the program in a memory, or reads a program from a storage medium and installs the program in a memory.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope and spirit of the inventions.

## Claims

1. An input and output method, comprising:
inputting an image captured by a camera;
performing a recognition process of recognizing a state of at least one of a first or second apparatus configured to process an object of conveyance or a state of the object of conveyance based on a result of an analysis of the image; and
outputting a signal for controlling the first or second apparatus based on the recognition process.

2. The input and output method according to claim 1, comprising performing a first recognition process of recognizing a state of the first apparatus based on the result of the analysis of the image and outputting a first signal for controlling the second apparatus based on the first recognition process.

3. The input and output method according to claim 2, comprising performing a second recognition process of recognizing a state of the second apparatus based on the result of the analysis of the image and outputting a second signal for controlling the first apparatus based on the second recognition process.

4. The input and output method according to claim 3, wherein
the first apparatus is configured to perform a first operation of conveying the object of conveyance from a first area to a second area and a second operation of moving from the second area to the first area,
the second apparatus is configured to perform a third operation of conveying the object of conveyance from the second area to a third area, and
the first signal is a command for causing the second apparatus to perform the third operation.

5. The input and output method according to claim 4, wherein the second signal is a command for causing the first apparatus to perform the second operation.

6. The input and output method according to claim 2, wherein the first recognition process includes recognizing a change in a speed of the first apparatus that conveys the object of conveyance.

7. The input and output method according to claim 6, wherein the first recognition process includes recognizing the first apparatus based on a characteristic of the change in the speed.

8. The input and output method according to claim 2, wherein the first recognition process includes recognizing stoppage of the first apparatus that conveys the object of conveyance.

9. The input and output method according to claim 8, wherein the first recognition process includes recognizing the first apparatus based on a positional relationship between a reference point of a stopping area and a reference point of the first apparatus.

10. The input and output method according to claim 1, comprising performing a first recognition process of recognizing states of the first and second apparatuses based on the result of the analysis of the image and outputting a first signal for controlling the first apparatus based on the first recognition process.

11. The input and output method according to claim 10, comprising performing a second recognition process of recognizing states of the first and second apparatuses based on the result of the analysis of the image and outputting a second signal for controlling the second apparatus based on the second recognition process.

12. The input and output method according to claim 11, comprising performing a third recognition process of recognizing a state of the second apparatus based on the result of the analysis of the image and outputting a third signal for controlling the first apparatus based on the third recognition process.

13. The input and output method according to claim 12, wherein
the object of conveyance is equipment for storing an article,
the first apparatus is configured to perform a first operation of conveying the equipment from a first area to a second area, a second operation of setting the equipment in the second apparatus, a third operation of retreating from the second apparatus, and a fourth operation of collecting the equipment set in the second apparatus,
the second apparatus is configured to perform a fifth operation of receiving the equipment set by the first apparatus and then discharging the article from the equipment to a predetermined position,
the first recognition process includes recognizing completion of conveyance of the equipment to the second area by the first apparatus and recognizing completion of preparation for reception of the equipment by the second apparatus, and
the first signal is a signal for causing the first apparatus to perform the second operation.

14. The input and output method according to claim 13, wherein
the second recognition process includes recognizing completion of reception of the equipment by the second apparatus and recognizing completion of retreat of the first apparatus, and
the second signal is a signal for causing the second apparatus to perform the fifth operation.

15. The input and output method according to claim 14, wherein
the third recognition process includes recognizing completion of discharge of the article, and
the third signal is a signal for causing the first apparatus to perform the fourth operation.

16. The input and output method according to claim 1, comprising performing a first recognition process of recognizing a state of the object of conveyance based on the result of the analysis of the image and outputting a first signal for controlling the first apparatus based on the first recognition process, wherein the first signal is a signal for causing the first apparatus to receive and convey the object of conveyance.

17. An input and output program for causing a computer to perform:
inputting an image captured by a camera;
performing a recognition process of recognizing a state of at least one of a first or second apparatus configured to process an object of conveyance or a state of the object of conveyance based on a result of an analysis of the image; and
outputting a signal for controlling the first or second apparatus based on the recognition process.

18. An input and output apparatus, comprising:
an input interface for inputting an image captured by a camera;
a processor configured to perform a recognition process of recognizing a state of at least one of a first or second apparatus configured to process an object of conveyance or a state of the object of conveyance based on a result of an analysis of the image; and
an output interface for outputting a signal for controlling the first or second apparatus based on the recognition process.

19. A non-transitory computer-readable storage medium storing a program for execution by a processor,
the program causing the processor to perform:
a function of inputting an image captured by a camera;
a function of performing a recognition process of recognizing a state of at least one of a first or second apparatus configured to process an object of conveyance or a state of the object of conveyance based on a result of an analysis of the image; and
a function of outputting a signal for controlling the first or second apparatus based on the recognition process.
